# EUROPEAN PATENT SPECIFICATION

(11) **EP 3 852 344 B1**
(45) Date of publication and mention of the grant of the patent: **26.07.2023**
(21) Application number: 18936960.6
(22) Date of filing: 15.10.2018
(51) Int. Cl.: H04L 61/4511

(54) **METHOD AND DEVICE FOR DOMAIN NAME RESOLUTION BY SENDING KEY VALUE TO GRS SERVER**
VERFAHREN UND VORRICHTUNG ZUR DOMÄNENNAMENAUFLÖSUNG DURCH SENDEN EINES SCHLÜSSELWERTS AN EINEN GRS-SERVER
PROCÉDÉ ET DISPOSITIF DE RÉSOLUTION DE NOM DE DOMAINE PAR ENVOI DE VALEUR DE CLÉ À UN SERVEUR GRS

(43) Date of publication of application: 21.07.2021
(73) Proprietor: HUAWEI TECHNOLOGIES CO., LTD., Shenzhen, Guangdong 518129 (CN)
(72) Inventor: HU, Xiongfeng, Shenzhen, Guangdong 518129 (CN); KE, Zunwei, Shenzhen, Guangdong 518129 (CN); ZHU, Hua, Shenzhen, Guangdong 518129 (CN)
(74) Representative: Thun, Clemens
(86) International application number: PCT/CN2018/110268
(87) International publication number: WO 2020/077497

(56) References cited:
- US-A1- 2012 124 372
- US-A1- 2016 063 578

## Description

### TECHNICAL FIELD

This application relates to the field of mobile communications, and in particular, to a method and a device for performing domain name resolution by sending a key value to a global router service (Global Router Service, GRS) server.

### BACKGROUND

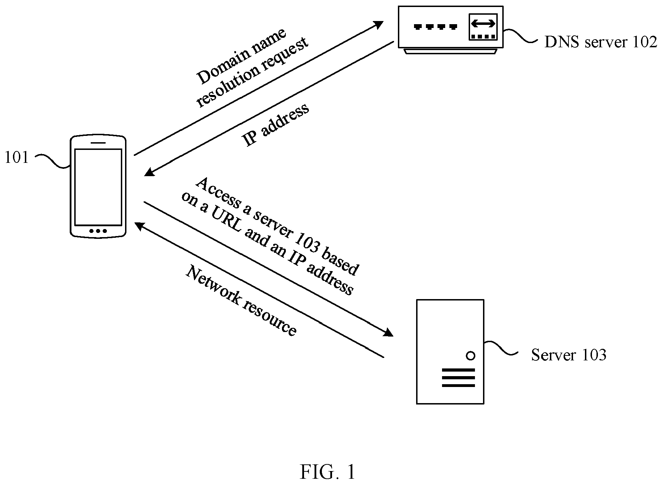

With emergence of the internet and cloud computing, more applications in electronic devices such as a mobile phone need to interact with servers deployed on the internet to obtain corresponding resources for users to browse. When an electronic device attempts to access a resource (such as a web page) on a server deployed on the internet, an address of the resource is usually represented in a form of a uniform resource locator (Uniform Resource Locator, URL). A domain name in the URL indicates an address of the to-be-accessed server. However, the server is usually identified by using an internet protocol (Internet Protocol, IP) address on the internet. Therefore, before accessing the server, the electronic device needs to convert the domain name in the URL into the IP address. For example, as shown in FIG. 1, when receiving a request for browsing a resource such as a web page from a user, an electronic device 101 may send a domain name resolution request to a domain name system (Domain Name System, DNS) server 102. The DNS server 102 returns, in response to the received domain name resolution request, an IP address obtained through resolution to the electronic device 101. Based on the requested URL and the received IP address, the electronic device 101 can access a corresponding server 103 to obtain a network resource for the user to browse.

Further, US 2012/0124372 A1 refers to approaches for protecting websites and website users from online threats. For example, a content server, such as a proxying content delivery network (CDN) server that is delivering content on behalf of an origin server, can modify URLs as they pass through the content server to obscured values that are given to the end-user client browser. The end-user browser can use the obscured URL to obtain content from the content server, but the URL may be valid only for a limited time, and may be invalid for obtaining content from the origin. Hence, information is hidden from the client, making attacks against the website more difficult and frustrating client-end malware that leverages knowledge of browsed URLs.

Further, CN 106357841 A refers to a domain name resolution method, device and system. The domain name resolution system comprises a terminal and a domain name server, wherein the terminal is used for acquiring a to-be-resolved domain name, encrypting the resolved domain name to obtain an encrypted domain name, and sending a domain name resolution request carrying the encrypted domain name to the domain name server to which a preset IP address points to; the domain name server is used for encrypting the encrypted domain name to obtain the to-be-resolved domain name, determining a target IP address set corresponding to the to-be-resolved domain name from a corresponding relation between a stored domain name and an IP address set, and sending the target IP address set to the terminal.

Further, CN 105763668 A refers to a domain name resolution method and apparatus. The method comprises the steps of receiving a domain name resolution message from a domain name request device, and querying a domain name list through domain name information carried in the domain name resolution message; if the domain name information is in the domain name list, transmitting to the domain name request device a domain name response message carrying an IP address corresponding to the domain name information; if the domain name information is not in the domain name list, acquiring the IP address corresponding to the domain name information from a DNS; and recording a corresponding relation between the domain name information and the IP address in the domain name list, and transmitting the domain name response message carrying the IP address to the domain name request device.

It is well-known that a DNS server is hijacked sometimes. If the DNS server is hijacked, in the foregoing process, after the user sends the request for browsing the resource, the domain name resolution request sent by the electronic device is intercepted by an insecure DNS server. The insecure DNS server returns a fake IP address to the electronic device. Based on the returned IP address, the electronic device may fail to access the server or receive a fake resource (for example, a phishing web page) for the user to browse, thereby affecting proper business running on the electronic device, affecting network security, and resulting in user privacy disclosure.

### SUMMARY

Embodiments provide a method and a device for performing domain name resolution by sending a key value to a GRS server, to ensure proper business running on an electronic device, ensure network security, and protect user privacy. This problem is solved by the subject matter of the independent claims. Further implementation forms are provided in the dependent claims.

To achieve the foregoing objective, the embodiments provide the following technical solutions:
A first aspect of the embodiments provides a domain name resolution method. The method performed by an electronic device and may include the steps of:
receiving a first input of a user, wherein the first input is used to trigger an application in the electronic device to interact with a certain server deployed on the internet to provide a business service for the user by accessing a resource on the certain server;
obtaining a key value and an identifier from a configuration file of the application in response to the first input,
wherein the key value is an application name of the application, a service name of the business service, or a service identifier of the business service, and
the identifier is an Internet Protocol, IP, address of a global router service, GRS, server, wherein the identifier identifies the server storing a correspondence between the key value and a uniform resource locator, URL;
sending the key value to the GRS server identified by the identifier;
receiving at least two IP addresses from the GRS server, the at least two IP addresses being based on the domain name in the URL;
determining a target IP address from the at least two IP addresses, by randomly selecting one of the at least two IP addresses as the target IP address;
accessing the resource on the certain server identified by the target IP address, to provide the business service for the user,
wherein the method further comprises:
receiving from the GRS server the uniform resource locator, URL, corresponding to the key value, wherein the URL comprises a domain name of the certain server that stores the resource; and
the accessing the resource on the certain server identified by the target IP address, to provide the business service for the user comprises:
sending a hypertext transfer protocol, HTTP/hypertext transfer protocol secure, HTTPS, request to the certain server identified by the target IP address, wherein the HTTP/HTTPS request comprises a URL obtained after the domain name in the URL is replaced with the target IP address; and
receiving an HTTP/HTTPS response from the certain server identified by the target IP address, wherein the HTTP/HTTPS response comprises the resource.

According to the domain name resolution method provided in this embodiment, when the electronic device needs to provide the business service for the user by accessing the resource on the server deployed on the internet, the electronic device may send, to the GRS server, the key value used to indicate to provide a corresponding business service for the user. The GRS server returns a corresponding IP address to the electronic device based on the key value. Based on the received IP address, the electronic device can access the resource on the server identified by the IP address, to provide the business service for the user. Compared with a case in which the electronic device sends the domain name to a DNS server for domain name resolution, in this case, because a quantity of GRS servers deployed in a network is less than a quantity of electronic devices, the GRS server performs load balancing control, and the GRS server has stronger security assurance and anti-attack means, it is difficult to attack the GRS server. In addition, the electronic device sends the key value to the GRS server. Even if the GRS server is attacked and an insecure server intercepts the key value, the insecure server cannot perform domain name resolution. Therefore, the key value is sent to the GRS server for domain name resolution, so that proper business running on the electronic device can be ensured, network security is ensured, and user privacy is protected. In addition, because the electronic device does not need to access the DNS server to implement domain name resolution, a delay of accessing, by the electronic device, the resource on the server deployed on the internet is reduced, and access performance is improved.

A second aspect of the embodiments provides a domain name resolution method performed by a global router service, GRS. The method includes the steps of:
receiving a key value from an electronic device,
wherein the key value is an application name of an application stored on the electronic device, a service name of a business service, or a service identifier of the business service,
wherein the application in the electronic device is used to interact with a certain server deployed on the internet to provide the business service for a user of the electronic device by accessing a resource on the certain server;
obtaining a uniform resource locator, URL, corresponding to the key value, wherein the URL comprises a domain name of the certain server that stores the resource;
obtaining at least two IP addresses based on the domain name in the URL;
sending the at least two IP addresses and the URL, corresponding to the key value to the electronic device.

According to the domain name resolution method provided in this embodiment, after receiving the key value sent by the electronic device, the GRS server obtains may obtain the at least two IP addresses based on the domain name in the URL corresponding to the key value, and return the at least two IP addresses to the electronic device. Compared with a case in which the electronic device sends the domain name to a DNS server for domain name resolution to obtain an IP address, in this case, because a quantity of GRS servers deployed in a network is less than a quantity of electronic devices, the GRS server performs load balancing control, and the GRS server has stronger security assurance and anti-attack means, it is difficult to attack the GRS server. In addition, the electronic device sends the key value to the GRS server. Even if the GRS server is attacked and an insecure server intercepts the key value, the insecure server cannot perform domain name resolution. Therefore, the key value is sent to the GRS server for domain name resolution, so that proper business running on the electronic device can be ensured, network security is ensured, and user privacy is protected. In addition, because the electronic device does not need to access the DNS server to implement domain name resolution, a delay of accessing, by the electronic device, the resource on the server deployed on the internet is reduced, and access performance is improved. Moreover, the GRS server sends the plurality of IP addresses to the electronic device, so that the electronic device can select one IP address from the plurality of IP addresses as the target IP address, and access the server corresponding to the target IP address to provide a corresponding business service for the user, thereby implementing load balancing.

With reference to the second aspect, in a possible implementation, that the GRS server obtains at least two IP addresses based on the domain name in the URL may specifically include: The

GRS server performs domain name resolution on the domain name in the URL to obtain the at least two IP addresses. In this way, the GRS server implements domain name resolution, and the electronic device does not need to access a DNS server to implement domain name resolution, so that a delay of accessing, by the electronic device, the resource on the server deployed on the internet is reduced, and access performance is improved.

With reference to the second aspect or the foregoing possible implementation, in another possible implementation, that the GRS server obtains at least two IP addresses based on the domain name in the URL may specifically include: The GRS server sends the domain name in the URL to a DNS server, and receives the at least two IP addresses from the DNS server. In addition, because security of transmission between the GRS server and the DNS server is relatively high, security of a link between the electronic device and the DNS server is relatively high, thereby further ensuring network security and protecting user privacy.

With reference to the second aspect or the foregoing possible implementation, in another possible implementation, the method may further include: The GRS server correspondingly stores, in the GRS server, the at least two IP addresses and the domain name in the URL. In this way, when the GRS server needs to subsequently perform domain name resolution, the GRS server may first search the GRS server for a corresponding IP address. If the corresponding IP address is found in the GRS server, there is no need to access the DNS server to perform domain name resolution, and the IP address found in the GRS server is directly returned to the electronic device. Therefore, a domain name resolution time is shortened, so that a response time of the electronic device is shortened.
A third aspect of the embodiments provides an electronic device. The electronic device may include: an input unit, configured to receive a first input of a user, where the first input may be used to trigger the electronic device to provide a business service for the user by accessing a resource on a server deployed on the internet; an obtaining unit, configured to obtain a key value and an identifier in response to the first input obtained by the input unit; a sending unit, configured to send the key value to a GRS server identified by the identifier obtained by the obtaining unit; a receiving unit, configured to receive a target IP address from a GRS server; and an access unit, configured to access a resource on a server identified by the target IP address received by the receiving unit, to provide a business service for the user.

With reference to the third aspect, in a possible implementation, the electronic device further includes a determining unit. The receiving unit is specifically configured to receive at least two IP addresses from the GRS server. The determining unit is configured to determine the target IP address from the at least two IP addresses received by the receiving unit.

With reference to the third aspect or the foregoing possible implementation, in another possible implementation, the receiving unit is further configured to receive, from the GRS server, a uniform resource locator URL corresponding to the key value, where the URL includes a domain name of the server that stores the resource. The access unit is specifically configured to: send an HTTP/HTTPS request to the server identified by the target IP address, where the HTTP/HTTPS request includes a URL obtained after the domain name in the URL is replaced with the target IP address; and receive an HTTP/HTTPS response from the server identified by the target IP address, where the HTTP/HTTPS response includes the resource.

A fourth aspect of the embodiments provides a GRS server, including: a receiving unit, configured to receive a key value from an electronic device; an obtaining unit, configured to: obtain a URL corresponding to the key value received by the receiving unit, where the URL includes a domain name of a server that stores a resource, and obtain at least two IP addresses based on the domain name in the URL; and a sending unit, configured to send, to the electronic device, the at least two IP addresses obtained by the obtaining unit.

With reference to the fourth aspect, in a possible implementation, that the obtaining unit obtains at least two IP addresses based on the domain name in the URL is specifically configured to perform domain name resolution on the domain name in the URL to obtain the at least two IP addresses.

With reference to the fourth aspect or the foregoing possible implementation, in another possible implementation, that the obtaining unit obtains at least two IP addresses based on the domain name in the URL is specifically configured to: send the domain name in the URL to a domain name system DNS server, and receive the at least two IP addresses from the DNS server.
With reference to the fourth aspect or the foregoing possible implementation, in another possible implementation, the GRS server further includes a storage unit, configured to correspondingly store, in the GRS server, the at least two IP addresses and the domain name in the URL.

According to a fifth aspect, a domain name resolution method is provided. The method may include: An electronic device receives an operation performed by a user on a control included in an interface of a first application, and sends an identifier of the control to a first server, where the control may be used to trigger the electronic device to interact with a server deployed on the internet to provide a business service for the user. The electronic device receives a resource from the first server, to provide the business service for the user.

According to a sixth aspect, a domain name resolution method is provided. The method may include: A first server receives an identifier of a control from an electronic device, and obtains a key value and an identifier based on the received identifier of the control, where the identifier may be an identifier of a GRS server that can perform domain name resolution, and may be an IP address or a domain name. The first server sends the key value to the GRS server identified by the identifier. Then, the first server may receive a target IP address from the GRS server. Based on the target IP address, the first server may obtain a resource on a server identified by the target IP address, and send the obtained resource to the electronic device.

According to the domain name resolution method provided in this embodiment, after receiving the identifier of the control from the electronic device, the first server may obtain, based on the identifier, the key value used to indicate to provide a business service for a user. The first server may send the key value to the GRS server. The GRS server may return a corresponding IP address to the first server based on the key value. Based on the received IP address, the first server can obtain the resource

from the server identified by the IP address, and return the resource to the electronic device, so that the electronic device provides the business service for the user based on the returned resource. Compared with a case in which the electronic device sends the domain name to a DNS server for domain name resolution, in this case, because a quantity of GRS servers deployed in a network is less than a quantity of electronic devices, the GRS server performs load balancing control, and the GRS server has stronger security assurance and anti-attack means, it is difficult to attack the GRS server. In addition, the electronic device sends the identifier of the control to the first server, and the first server sends the key value to the GRS server. Even if the GRS server is attacked and an insecure server intercepts the key value, the insecure server cannot perform domain name resolution. Therefore, the key value is sent to the GRS server for domain name resolution, so that proper business running on the electronic device can be ensured, network security is ensured, and user privacy is protected. In addition, because the electronic device does not need to access the DNS server to implement domain name resolution, a delay of accessing, by the electronic device, the resource on the server deployed on the internet is reduced, and access performance is improved.

With reference to the sixth aspect, in a possible implementation, that the first server receives a target IP address from the GRS server may specifically include: The first server receives at least two IP addresses from the GRS server, and determines the target IP address from the at least two IP addresses. In this way, the first server selects one IP address from the plurality of IP addresses as the target IP address, obtains the resource from the server corresponding to the target IP address, and returns the resource to the electronic device, so that the electronic device provides a corresponding business service for a user, thereby implementing load balancing.

With reference to the sixth aspect, in another possible implementation, the method may further include: The first server receives, from the GRS server, a URL corresponding to the key value, where the URL includes a domain name of the server that stores the resource. That the first server obtains a resource on a server identified by the target IP address may specifically include: The first server sends an HTTP/HTTPS request to the server identified by the target IP address, where the HTTP/HTTPS request includes a URL obtained after the domain name in the URL is replaced with the target IP address. The first server receives an HTTP/HTTPS response from the server identified by the target IP address, where the HTTP/HTTPS response includes the resource.

A seventh aspect of the embodiments provides an electronic device, including a memory, a processor, and a computer program that is stored in the memory and that can be run on the processor. When the processor executes the computer program, the electronic device is enabled to implement the domain name resolution method according to any one of the first aspect or the possible implementations of the first aspect.

An eighth aspect of the embodiments provides a GRS server, including a memory, a processor, and a computer program that is stored in the memory and that can be run on the processor. When the processor executes the computer program, the GRS server is enabled to implement the domain name resolution method according to any one of the second aspect or the possible implementations of the second aspect.

A ninth aspect of the embodiments provides a server, including a memory, a processor, and a computer program that is stored in the memory and that can be run on the processor. When the processor executes the computer program, the server is enabled to implement the domain name resolution method according to any one of the sixth aspect or the possible implementations of the sixth aspect.

A tenth aspect of the embodiments provides a computer program product including an instruction. When the computer program product is run on an electronic device, the electronic device is enabled to perform the domain name resolution method according to any one of the first aspect or the possible implementations of the first aspect.
An eleventh aspect of the embodiments provides a computer program product including an instruction. When the computer program product is run on a GRS server, the GRS server is enabled to perform the domain name resolution method according to any one of the second aspect or the possible implementations of the second aspect.

A twelfth aspect of the embodiments provides a computer readable storage medium, including an instruction. When the instruction is run on an electronic device, the electronic device is enabled to perform the domain name resolution method according to any one of the first aspect or the possible implementations of the first aspect.

A thirteenth aspect of the embodiments provides a computer readable storage medium, including an instruction. When the instruction is run on a GRS server, the GRS server is enabled to perform the domain name resolution method according to any one of the second aspect or the possible implementations of the second aspect.

A fourteenth aspect of the embodiments provides a domain name resolution system. The system may include an electronic device and a GRS server. The electronic device receives a first input of a user, and obtains a key value and an identifier in response to the first input, where the first input is used to trigger the electronic device to provide a business service for the user by accessing a resource on a server deployed on the internet. The electronic device sends the key value to the GRS server identified by the identifier. The GRS server obtains a URL corresponding to the key value, where the URL includes a domain name of a server that stores a resource; and performs domain name resolution on the domain name in the URL to obtain at least two IP addresses, and sends the at least two IP addresses to the electronic device. The electronic device determines a target IP address from the at least two IP addresses. The electronic device accesses a resource on a server identified by the target IP address, to provide the business service for the user.

A fifteenth aspect of the embodiments provides a domain name resolution system. The system may include an electronic device, a GRS server, and a DNS server. The electronic device receives a first input of a user, and obtains a key value and an identifier in response to the first input, where the first input is used to trigger the electronic device to provide a business service for the user by
accessing a resource on a server deployed on the internet. The electronic device sends the key value to the GRS server identified by the identifier. The GRS server obtains a URL corresponding to the key value, where the URL includes a domain name of a server that stores a resource. The GRS server sends the domain name in the URL to the DNS server. The DNS server performs domain name resolution on the domain name in the URL to obtain at least two IP addresses, and sends the at least two IP addresses to the GRS server. The GRS server sends the at least two IP addresses to the electronic device. The electronic device determines a target IP address from the at least two IP addresses. The electronic device accesses a resource on a server identified by the target IP address, to provide the business service for the user.

With reference to the fifteenth aspect, in a possible implementation, the GRS server correspondingly stores, in the GRS server, the at least two IP addresses and the domain name in the URL. It should be understood that descriptions of technical features, technical solutions, beneficial effects, or similar words in this application do not imply that all features and advantages can be implemented in any individual embodiment. On the contrary, it may be understood that descriptions of the features or the beneficial effects mean that at least one embodiment includes a specific technical feature, technical solution, or beneficial effect. Therefore, the descriptions of the technical features, the technical solutions, or the beneficial effects in this specification may not necessarily belong to one embodiment. Further, the technical features, the technical solutions, and the beneficial effects described in the embodiments may be combined in any proper manner. A person skilled in the art understands that an embodiment may be implemented without one or more specific technical features, technical solutions, or beneficial effects in a specific embodiment. In other embodiments, additional technical features and beneficial effects may be further identified in a specific embodiment that does not reflect all the embodiments.

### BRIEF DESCRIPTION OF DRAWINGS

FIG. 1 is a schematic diagram of an architecture to which domain name resolution is applied according to some embodiments;
FIG. 2 is a schematic structural diagram of an electronic device according to an embodiment;
FIG. 3 is a block diagram of a software structure of an electronic device according to an embodiment;
FIG. 4 is a schematic structural diagram of a server according to an embodiment;
FIG. 5 is a schematic diagram of a system architecture to which a domain name resolution method in this application may be applied according to an embodiment;
FIG. 6 is a schematic flowchart of a domain name resolution method according to an embodiment;
FIG. 7(a) and FIG. 7(b) are a schematic diagram of a display interface of an electronic device according to an embodiment;
FIG. 8 is another schematic diagram of a display interface of an electronic device according to an embodiment;
FIG. 9 is another schematic diagram of a system architecture to which a domain name resolution method in this application may be applied according to an embodiment;
FIG. 10 is another schematic flowchart of a domain name resolution method according to an embodiment;
FIG. 11 is still another schematic diagram of a system architecture to which a domain name resolution method in this application may be applied according to an embodiment;
FIG. 12A and FIG. 12B are still another schematic flowchart of a domain name resolution method according to an embodiment;
FIG. 13(a) and FIG. 13(b) are still another schematic diagram of a display interface of an electronic device according to an embodiment;
FIG. 14 is another schematic structural diagram of an electronic device according to an embodiment;
FIG. 15 is still another schematic structural diagram of an electronic device according to an embodiment; and
FIG. 16 is a schematic structural diagram of a GRS server according to an embodiment.

### DESCRIPTION OF EMBODIMENTS

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of the embodiments, unless otherwise stated, "a plurality of" means two or more than two. The word such as "example" or "for example" is used to represent giving an example, an illustration, or a description. Any embodiment or design scheme described as an "example" or "for example" in the embodiments should not be explained as being more preferred or having more advantages than another embodiment or design scheme. To be more specific, use of the word such as "example" or "for example" is intended to present a related concept in a specific manner.

Embodiments provide a domain name resolution method. The method may be applied to a scenario in which an electronic device interacts with a server deployed on the internet to provide a corresponding business service for a user, for example, to provide a resource (such as a web page, a picture, a document, an application, music, or a video) for the user to browse. According to the method provided in the embodiments, a DNS server can be effectively prevented from being hijacked. Therefore, proper business running on the electronic device can be ensured, network security is ensured, and user privacy is protected.

Hijacking the DNS server is intercepting, in a network hijacking range, a domain name resolution request sent by the electronic device, analyzing a domain name carried in the domain name resolution request, and returning a fake IP address to the electronic device, or performing no processing to leave the domain name resolution request unresponded. An ultimate purpose of hijacking the DNS server is to prevent a specific server from receiving a user's request and responding to the user, or to enable the user to access a fake resource.

In addition, it may be understood that a URL used to represent an address of a resource may include three parts. The three parts are a protocol (or referred to as a mode) used to access the resource, a domain name (or an IP address, which is usually the domain name for the convenience of the user to remember) of a server that stores the resource, and an access path of the resource and a file name. Generally, different parts are separated by "/". For example, the URL is "protocol://domain name/path/file name". Specially, the URL may end with "/" without the file name. In this case, the URL references a default file (usually corresponding to a home page) in the last directory in the path. For example, if the URL is "https://www.huawei.com/news", "https:" is the protocol used to access the resource, "www.huawei.com" is the domain name of the server that stores the resource, and "news" is the access path of the resource.

For example, the electronic device in the embodiments may be a device such as a mobile phone, a tablet computer, a desktop computer, a laptop computer, a handheld computer, a notebook computer, an ultra-mobile personal computer (Ultra-mobile Personal Computer, UMPC), a netbook, a cellular phone, a personal digital assistant (Personal Digital Assistant, PDA), a wearable device (for example, a smartwatch), or an augmented reality (augmented reality, AR)/virtual reality (virtual reality, VR) device. A specific form of the device is not specially limited in the embodiments.

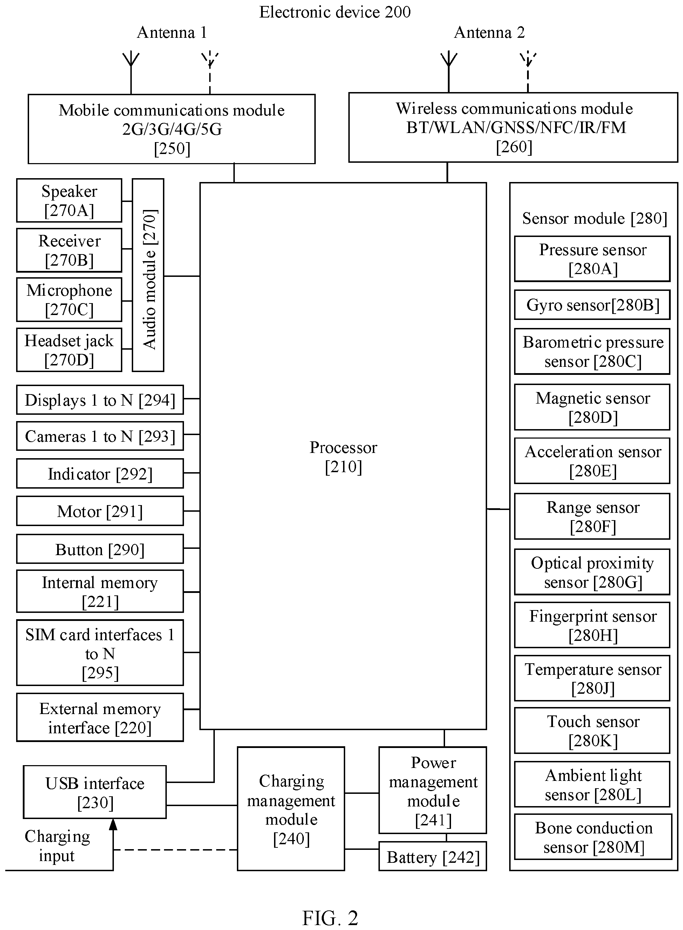

FIG. 2 is a schematic structural diagram of an electronic device 200 according to an embodiment.

As shown in FIG. 2, the electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communications module 250, a wireless communications module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a pressure sensor 280A, a gyro sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that a structure shown in this embodiment does not constitute a specific limitation on the electronic device 200. In some other embodiments, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural network processing unit, NPU). Different processing units may be independent devices, or may be integrated into one or more processors.

The controller may be a nerve center and a command center of the electronic device 200. The controller may generate an operation control signal based on instruction operation code and a time sequence signal, to complete control of instruction reading and instruction execution.

A memory may be further disposed in the processor 210, and is configured to store an instruction and data. In some embodiments, the memory in the processor 210 is a cache memory. The memory may store an instruction or data that is just used or cyclically used by the processor 210. If the processor 210 needs to use the instruction or the data again, the processor 210 may directly invoke the instruction or the data from the memory. This avoids repeated saving and access operations and reduces a waiting time of the processor 210. Therefore, system efficiency is improved.

In some embodiments, the processor 210 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 210 may include a plurality of groups of I2C buses. The processor 210 may be separately coupled to the touch sensor 280K, a charger, a flash, the camera 293, and the like by using different I2C bus interfaces. For example, the processor 210 may be coupled to the touch sensor 280K by using the I2C interface, so that the processor 210 communicates with the touch sensor 280K by using the I2C bus interface, to implement a touch function of the electronic device 200.

The I2S interface may be configured to perform audio communication. In some embodiments, the processor 210 may include a plurality of groups of I2S buses. The processor 210 may be coupled to the audio module 270 by using the I2S bus, to implement communication between the processor 210 and the audio module 270. In some embodiments, the audio module 270 may transfer an audio signal to the wireless communications module 260 by using the I2S interface, to implement a function of answering a call by using a Bluetooth headset.

The PCM interface may also be configured to: perform audio communication, and sample, quantize, and code an analog signal. In some embodiments, the audio module 270 may be coupled to the wireless communications module 260 by using the PCM bus interface. In some embodiments, the audio module 270 may alternatively transfer an audio signal to the wireless communications module 260 by using the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 210 and the wireless communications module 260. For example, the processor 210 communicates with a Bluetooth module in the wireless communications module 260 by using the UART interface, to implement a Bluetooth function. In some embodiments, the audio module 270 may transfer an audio signal to the wireless communications module 260 by using the UART interface, to implement a function of playing music by using a Bluetooth headset.

The MIPI interface may be configured to connect the processor 210 and a peripheral component such as the display 294 or the camera 293. The MIPI interface includes a camera serial interface (camera serial interface, CSI), a display serial interface (display serial interface, DSI), or the like. In some embodiments, the processor 210 communicates with the camera 293 by using the CSI interface, to implement a photographing function of the electronic device 200. The processor 210 communicates with the display 294 by using the DSI interface, to implement a display function of the electronic device 200.

The GPIO interface may be configured by using software. The GPIO interface may be configured as a control signal or a data signal. In some embodiments, the GPIO interface may be configured to connect the processor 210 to the camera 293, the display 294, the wireless communications module 260, the audio module 270, the sensor module 280, or the like. The GPIO interface may alternatively be configured as the I2C interface, the I2S interface, the UART interface, the MIPI interface, or the like.

The USB interface 230 is an interface that conforms to a USB standard specification, and may be specifically a mini USB interface, a micro USB interface, a USB Type-C interface, or the like. The USB interface 230 may be configured to connect to the charger to charge the electronic device 200, or may be configured to perform data transmission between the electronic device 200 and a peripheral device, or may be configured to connect to a headset to play audio by using the headset. The interface may be alternatively configured to connect to another electronic device, such as an AR device.

It may be understood that an interface connection relationship between the modules that is shown in this embodiment is merely an example for description, and does not constitute a limitation on the structure of the electronic device 200. In some other embodiments, the electronic device 200 may alternatively use an interface connection manner different from that in the foregoing embodiment, or a combination of a plurality of interface connection manners.

The charging management module 240 is configured to receive a charging input from the charger. The charger may be a wireless charger or a wired charger. In some embodiments of wired charging, the charging management module 240 may receive a charging input of the wired charger by using the USB interface 230. In some embodiments of wireless charging, the charging management module 240 may receive a wireless charging input by using a wireless charging coil of the electronic device 200. The charging management module 240 supplies power to the electronic device by using the power management module 241 while charging the battery 242.

The power management module 241 is configured to connect the battery 242 and the charging management module 240 to the processor 210. The power management module 241 receives an input of the battery 242 and/or the charging management module 240, and supplies power to the processor 210, the internal memory 221, an external memory, the display 294, the camera 293, the wireless communications module 260, and the like. The power management module 241 may be further configured to monitor parameters such as a battery capacity, a battery cycle count, and a battery health status (electric leakage or impedance). In some other embodiments, the power management module 241 may alternatively be disposed in the processor 210. In some other embodiments, the power management module 241 and the charging management module 240 may alternatively be disposed in a same device.

A wireless communication function of the electronic device 200 may be implemented by using the antenna 1, the antenna 2, the mobile communications module 250, the wireless communications module 260, the modem processor, the baseband processor, and the like.

The antenna 1 and the antenna 2 are configured to: transmit and receive an electromagnetic wave signal. Each antenna in the electronic device 200 may be configured to cover one or more communications frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communications module 250 may provide a wireless communication solution that includes 2G/3G/4G/5G or the like and that is applied to the electronic device 200. The mobile communications module 250 may include at least one filter, a switch, a power amplifier, a low noise amplifier (low noise amplifier, LNA), and the like. The mobile communications module 250 may receive an electromagnetic wave by using the antenna 1, perform processing such as filtering or amplification on the received electromagnetic wave, and transfer the electromagnetic wave to the modem processor for demodulation. The mobile communications module 250 may further amplify a signal modulated by the modem processor, and convert the signal into an electromagnetic wave for radiation by using the antenna 1. In some embodiments, at least some function modules in the mobile communications module 250 may be disposed in the processor 210. In some embodiments, at least some function modules in the mobile communications module 250 may be disposed in a same device as at least some modules in the processor 210.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 270A, the receiver 270B, or the like), or displays an image or a video by using the display 294. In some embodiments, the modem processor may be an independent component. In some other embodiments, the modem processor may be independent of the processor 210, and is disposed in a same device as the mobile communications module 250 or another function module.

The wireless communications module 260 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communications module 260 may be one or more devices integrating at least one communications processing module. The wireless communications module 260 receives an electromagnetic wave by using the antenna 2, performs frequency modulation and filtering processing on an electromagnetic wave signal, and sends a processed signal to the processor 210. The wireless communications module 260 may further receive a to-be-sent signal from the processor 210, perform frequency modulation and amplification on the signal, and convert the signal into an electromagnetic wave for radiation by using the antenna 2.

In some embodiments, the antenna 1 and the mobile communications module 250 in the electronic device 200 are coupled, and the antenna 2 and the wireless communications module 260 in the electronic device 200 are coupled, so that the electronic device 200 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite-based augmentation system (satellite-based augmentation systems, SBAS).

The electronic device 200 implements a display function by using the GPU, the display 294, the application processor, and the like. The GPU is a microprocessor for image processing, and is connected to the display 294 and the application processor. The GPU is configured to perform mathematical and geometric calculation, and is configured to render an image. The processor 210 may include one or more GPUs that execute a program instruction to generate or change display information.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 200 may include one or N displays 294, where N is a positive integer greater than 1.

The electronic device 200 may implement a photographing function by using the ISP, the camera 293, the video codec, the GPU, the display 294, the application processor, and the like.

The ISP is configured to process data fed back by the camera 293. For example, during photographing, a shutter is opened, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 293.

The camera 293 is configured to capture a static image or a video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal of a standard format such as RGB or YUV. In some embodiments, the electronic device 200 may include one or N cameras 293, where N is a positive integer greater than 1.

The digital signal processor is configured to process a digital signal. In addition to a digital image signal, the digital signal processor may further process another digital signal. For example, when the electronic device 200 selects a frequency, the digital signal processor is configured to perform Fourier transform on frequency energy and the like.

The video codec is configured to: compress or decompress a digital video. The electronic device 200 may support one or more video codecs. In this way, the electronic device 200 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, which quickly processes input information by referring to a structure of a biological neural network, for example, by referring to a transfer mode between human brain neurons, and may further continuously perform self-learning. The NPU can implement applications such as intelligent cognition of the electronic device 200, such as image recognition, facial recognition, speech recognition, and text understanding.

The external memory interface 220 may be configured to connect to an external storage card such as a micro SD card, to extend a storage capability of the electronic device 200. The external storage card communicates with the processor 210 by using the external memory interface 220, to implement a data storage function. For example, a file such as music or a video is stored in the external memory card.

The internal memory 221 may be configured to store computer-executable program code, and the executable program code includes an instruction. The processor 210 performs various function applications of the electronic device 200 and data processing by running the instruction stored in the internal memory 221. The internal memory 221 may include a program storage area and a data storage area. The program storage area may store an operating system, an application required by at least one function (for example, a voice playing function or an image playing function), and the like. The data storage area may store data (for example, audio data or an address book) created during use of the electronic device 200, and the like. In addition, the internal memory 221 may include a highspeed random access memory, and may further include a nonvolatile memory, for example, at least one magnetic disk storage device, a flash memory device, or a universal flash storage (universal flash storage, UFS).

The electronic device 200 can implement an audio function such as music playback or recording by using the audio module 270, the speaker 270A, the receiver 270B, the microphone 170C, the headset jack 170D, the application processor, and the like.

The audio module 270 is configured to convert digital audio information into an analog audio signal for output, and is also configured to convert analog audio input into a digital audio signal. The audio module 270 may be further configured to: code and decode an audio signal. In some embodiments, the audio module 270 may be disposed in the processor 210, or some function modules in the audio module 270 are disposed in the processor 210.

The speaker 270A, also referred to as a "horn", is configured to convert an audio electrical signal into a sound signal. The electronic device 200 may listen to music or answer a hands-free call by using the speaker 270A.

The receiver 270B, also referred to as an "earpiece", is configured to convert an audio electrical signal into a sound signal. When the electronic device 200 answers a call or receives voice information, the receiver 270B may be placed close to a human ear to listen to a voice.

The microphone 270C, also referred to as a "mike" or a "mic", is configured to convert a sound signal into an electrical signal. When making a call or sending voice information, a user may make a sound by moving a human mouth close to the microphone 270C to input a sound signal to the microphone 270C. At least one microphone 270C may be disposed in the electronic device 200. In some other embodiments, two microphones 270C may be disposed in the electronic device 200, to collect a sound signal and further implement a noise reduction function. In some other embodiments, three, four, or more microphones 270C may alternatively be disposed in the electronic device 200, to collect a sound signal, reduce noise, identify a sound source, implement a directional recording function, and the like.

The headset jack 270D is configured to connect to a wired headset. The headset jack 270D may be the USB interface 230, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 280A is configured to sense a pressure signal, and can convert the pressure signal into an electrical signal. In some embodiments, the pressure sensor 280A may be disposed on the display 294. There are many types of pressure sensors 280A such as a resistive pressure sensor, an inductive pressure sensor, and a capacitive pressure sensor. The capacitive pressure sensor may include at least two parallel plates made of conductive materials. Capacitance between electrodes changes when a force is applied to the pressure sensor 280A. The electronic device 200 determines pressure intensity based on the change of the capacitance. When a touch operation is performed on the display 294, the electronic device 200 detects intensity of the touch operation based on the pressure sensor 280A. The electronic device 200 may also calculate a touch location based on a detection signal of the pressure sensor 280A. In some embodiments, touch operations that are performed at a same touch location but have different touch operation intensity may correspond to different operation instructions. For example, when a touch operation whose touch operation intensity is less than a first pressure threshold is performed on a Messaging icon, an instruction for viewing an SMS message is executed. When a touch operation whose touch operation intensity is greater than or equal to the first pressure threshold is performed on a Messaging icon, an instruction for creating a new SMS message is executed.

The gyro sensor 280B may be configured to determine a motion posture of the electronic device 200. In some embodiments, an angular velocity of the electronic device 200 around three axes (namely, x, y, and z axes) may be determined by using the gyro sensor 280B. The gyro sensor 280B may be used for image stabilization during photographing. For example, when the shutter is pressed, the gyro sensor 280B detects an angle at which the electronic device 200 jitters, obtains, through calculation based on the angle, a distance for which a lens module needs to compensate, and allows the lens to cancel the jitter of the electronic device 200 through reverse motion, to implement image stabilization. The gyro sensor 280B may also be used in navigation and somatic game scenarios.

The barometric pressure sensor 280C is configured to measure atmospheric pressure. In some embodiments, the electronic device 200 calculates an altitude by using a value of the atmospheric pressure measured by the barometric pressure sensor 280C, to assist positioning and navigation.

The magnetic sensor 280D includes a Hall sensor. The electronic device 200 may detect opening and closing of a flip leather case by using the magnetic sensor 280D. In some embodiments, when the electronic device 200 is a clamshell phone, the electronic device 200 may detect opening and closing of a flip cover based on the magnetic sensor 280D. Further, a feature such as automatic unlocking when the flip cover is opened is set based on a detected opening/closing state of the leather case or a detected opening/closing state of the flip cover.

The acceleration sensor 280E may detect magnitude of accelerations in various directions (usually on three axes) of the electronic device 200, and may detect magnitude and a direction of the gravity when the electronic device 200 is still. The acceleration sensor 280E may be further configured to identify a posture of the electronic device, and is applied to an application such as switching between landscape orientation and portrait orientation or a pedometer.

The distance sensor 280F is configured to measure a distance. The electronic device 200 may measure the distance through infrared or a laser. In some embodiments, in a photographing scenario, the electronic device 200 may perform ranging by using the distance sensor 280F to implement fast focusing.

The optical proximity sensor 280G may include, for example, a light-emitting diode (LED) and an optical detector, for example, a photodiode. The light-emitting diode may be an infrared light-emitting diode. The electronic device 200 emits infrared light by using the light-emitting diode. The electronic device 200 detects infrared reflected light from a nearby object by using the photodiode. When detecting sufficient reflected light, the electronic device 200 may determine that there is an object near the electronic device 200. When detecting insufficient reflected light, the electronic device 200 may determine that there is no object near the electronic device 200. The electronic device 200 may detect, by using the optical proximity sensor 280G, that the user holds the electronic device 200 close to an ear to make a call, to automatically turn off a screen for power saving. The optical proximity sensor 280G may also be used in a leather case mode or a pocket mode to automatically unlock or lock the screen.

The ambient light sensor 280L is configured to sense ambient light luminance. The electronic device 200 may adaptively adjust luminance of the display 294 based on the sensed ambient light luminance. The ambient light sensor 280L may also be configured to automatically adjust a white balance during photographing. The ambient light sensor 280L may also cooperate with the optical proximity sensor 280G to detect whether the electronic device 200 is in a pocket to prevent an accidental touch.

The fingerprint sensor 280H is configured to collect a fingerprint. The electronic device 200 may use a feature of the collected fingerprint to implement fingerprint-based unlocking, application lock access, fingerprint-based photographing, fingerprint-based call answering, and the like.

The temperature sensor 280J is configured to detect a temperature. In some embodiments, the electronic device 200 executes a temperature processing policy by using the temperature detected by the temperature sensor 280J. For example, when the temperature reported by the temperature sensor 280J exceeds a threshold, the electronic device 200 lowers performance of a processor located near the temperature sensor 280J, to reduce power consumption and implement thermal protection. In some other embodiments, when the temperature is less than another threshold, the electronic device 200 heats the battery 242, to avoid a case in which the electronic device 200 is shut down abnormally due to a low temperature. In some other embodiments, when the temperature is less than still another threshold, the electronic device 200 boosts an output voltage of the battery 242, to avoid an abnormal shutdown caused by a low temperature.

The touch sensor 280K is also referred to as a "touch panel". The touch sensor 280K may be disposed on the display 294. The touch sensor 280K and the display 294 form a touchscreen. The touch sensor 280K is configured to detect a touch operation performed on or near the touch sensor 280K. The touch sensor may transfer the detected touch operation to the application processor, to determine a type of a touch event. Visual output related to the touch operation may be provided by using the display 294. In some other embodiments, the touch sensor 280K may also be disposed on a surface of the electronic device 200 at a location different from that of the display 294.

The bone conduction sensor 280M may obtain a vibration signal. In some embodiments, the bone conduction sensor 280M may obtain a vibration signal of a vibration bone of a human vocal part. The bone conduction sensor 280M may also contact a body pulse to receive a blood pressure beating signal. In some embodiments, the bone conduction sensor 280M may also be disposed in the headset, to combine into a bone conduction headset. The audio module 270 may obtain a voice signal through parsing based on the vibration signal that is of the vibration bone of the vocal part and that is obtained by the bone conduction sensor 280M, to implement a voice function. The application processor may parse heart rate information based on the blood pressure beating signal obtained by the bone conduction sensor 280M, to implement a heart rate detection function.

The button 290 includes a power button, a volume button, and the like. The button 290 may be a mechanical button, or may be a touch button. The electronic device 200 may receive a button input, and generate a button signal input related to a user setting and function control of the electronic device 200.

The motor 291 may generate a vibration prompt. The motor 291 may be used for an incoming call vibration prompt, or may be used for a touch vibration feedback. For example, touch operations performed on different applications (for example, a photographing application and an audio playing application) may correspond to different vibration feedback effects. The motor 291 may also generate different vibration feedback effects for touch operations performed on different areas of the display 294. Different application scenarios (for example, a time reminder, information receiving, an alarm clock, a game, and the like) may also correspond to different vibration feedback effects. The touch vibration feedback effect may also be customized.

The indicator 292 may be an indicator light, and may be configured to indicate a charging status and a power change, or may be configured to indicate a message, a missed call, a notification, and the like.

The SIM card interface 295 is configured to connect to a SIM card. The SIM card may be inserted into the SIM card interface 295 or plugged from the SIM card interface 295, to come into contact with or be separated from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or different types. The SIM card interface 295 may also be compatible with different types of SIM cards. The SIM card interface 295 may also be compatible with the external storage card. The electronic device 200 interacts with a network by using the SIM card, to implement a call function, a data communication function, and the like. In some embodiments, the electronic device 200 uses an eSIM, namely, an embedded SIM card. The eSIM card may be embedded into the electronic device 200, and cannot be separated from the electronic device 200.

A software system of the electronic device 200 may use a layered architecture, an event-driven architecture, a microkernel architecture, a micro service architecture, or a cloud architecture. In this embodiment, an Android system of the layered architecture is used as an example to describe a software structure of the electronic device 200.

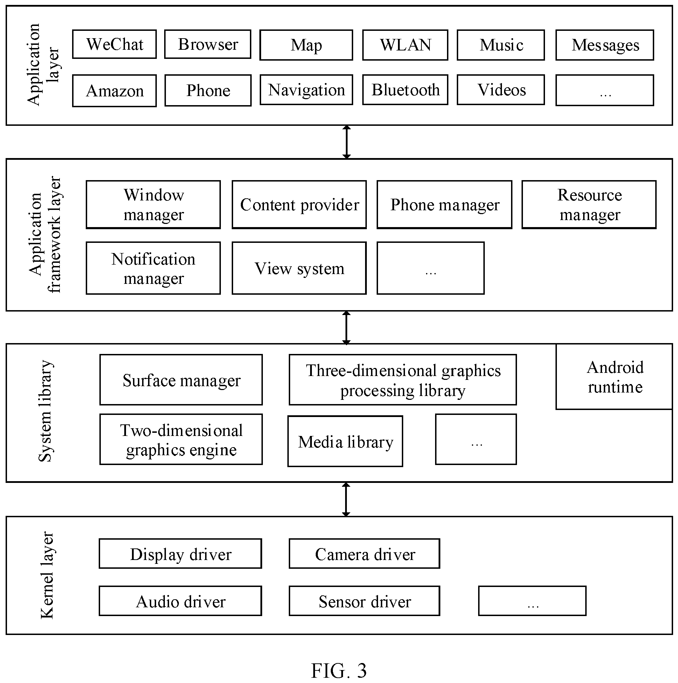

FIG. 3 is a block diagram of a software structure of the electronic device 200 according to an embodiment.

In the layered architecture, software is divided into several layers, and each layer has a clear role and task. The layers communicate with each other by using a software interface. In some embodiments, the Android system is divided into four layers, namely, an application layer, an application framework layer, an Android runtime (Android runtime) and system library, and a kernel layer from top to bottom.

The application layer may include a series of application packages.

As shown in FIG. 3, the application packages may include applications such as WeChat, Amazon, Browser, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and make the data accessible to an application. The data may include a video, an image, audio, calls that are made and received, a browsing history and a bookmark, an address book, and the like.

The view system includes visual controls such as a control for displaying a text and a control for displaying a picture. The view system may be configured to construct an application. A display interface may include one or more views. For example, a display interface including a Messaging notification icon may include a text display view and a picture display view.

The phone manager is configured to provide a communication function of the electronic device 200, for example, management of a call status (including answering, declining, and the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to: notify download completion, provide a message reminder, and the like. The notification manager may alternatively be a notification that appears in a top status bar of the system in a form of a graph or a scroll bar text, for example, a notification of an application running on the background, or may be a notification that appears on the screen in a form of a dialog window. For example, text information is displayed in the status bar, a prompt tone is played, the electronic device vibrates, or an indicator light blinks.

The Android runtime includes a kernel library and a virtual machine. The Android runtime is responsible for scheduling and management of the Android system.

The core library includes two parts: a function that needs to be invoked in java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording of a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For example, all technical solutions in the following embodiments may be implemented in the electronic device 200 that has the foregoing hardware architecture and software architecture.

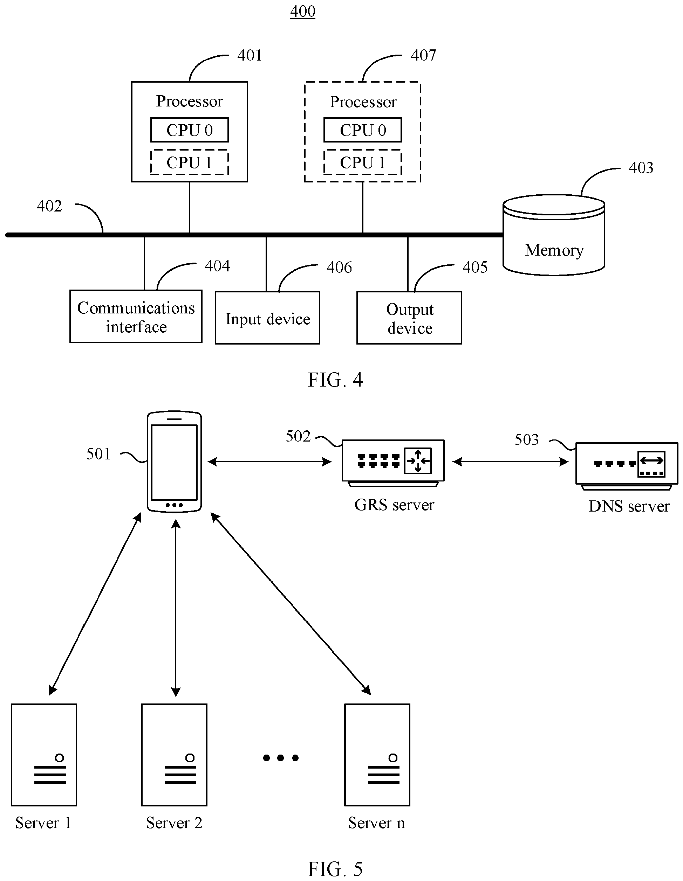

For details, refer to FIG. 4. A server in this embodiment may be implemented by using a computer system 400 shown in FIG. 4. The computer system 400 may include at least one processor 401, a communications bus 402, a memory 403, and at least one communications interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solution in this embodiment.

In a specific implementation, in an embodiment, the processor 401 may include one or more CPUs, for example, a CPU 0 and a CPU 1 in FIG. 4. Each CPU may support a plurality of virtual CPUs, and the virtual CPU is also referred to as a VCPU.

In a specific implementation, in an embodiment, the computer system 400 may include a plurality of processors, for example, the processor 401 and a processor 407 in FIG. 4. Each of these processors may be a single-core processor (single-CPU), or may be a multi-core processor (multi-CPU). The processor herein may be one or more devices, circuits, and/or processing cores configured to process data (for example, a computer program instruction).

The communications bus 402 may include a path used to transmit information between the foregoing components.

The memory 403 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store desired program code in a form of an instruction or a data structure and that can be accessed by a computer. However, the memory 403 is not limited thereto. The memory 403 may exist independently, and is connected to the processor 401 by using the communications bus 402. The memory 403 may alternatively be integrated with the processor 401.

The memory 403 is configured to store application code for executing the solution provided in this embodiment, and the processor 401 controls the execution. The processor 401 is configured to execute the application code stored in the memory 403, to control the computer system 400 to implement the domain name resolution method provided in the following embodiments.

The communications interface 404 may be any apparatus such as a transceiver, and is configured to communicate with another device or a communications network such as the Ethernet, a radio access network (radio access network, RAN), or a wireless local area network (wireless local area network, WLAN).

In a specific implementation, in an embodiment, the computer system 400 may further include an output device 405 and an input device 406. The output device 405 communicates with the processor 401, and may display information in a plurality of manners. For example, the output device 405 may be an LCD, a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensing device.

The computer system 400 may be a general-purpose communications device or a dedicated communications device. A type of the computer system 400 is not limited in this embodiment. For example, the computer system 400 may be a desktop computer, a portable computer, a network server, a personal digital assistant (personal digital assistant, PDA), a mobile phone, a tablet computer, a wireless terminal device, an embedded device, or a device with a structure similar to that in FIG. 4. The components in the computer system 400 may be simultaneously deployed in a same computer device, or may be deployed in different computer devices located in a distributed system.

The following describes, in detail with reference to the accompanying drawings and specific application scenarios, a domain name resolution method provided in the embodiments.

FIG. 5 is a schematic diagram of a system architecture to which a domain name resolution method may be applied according to an embodiment. The system architecture may include an electronic device 501, a GRS server 502, a DNS server 503, and n servers deployed on the internet. The n servers deployed on the internet are a server 1, a server 2, ..., and a server n. For a specific structure of the electronic device 501, refer to the electronic device 200 shown in FIG. 2. For specific structures of the GRS server 502, the DNS server 503, and the n servers deployed on the internet, refer to the computer system 400 shown in FIG. 4.

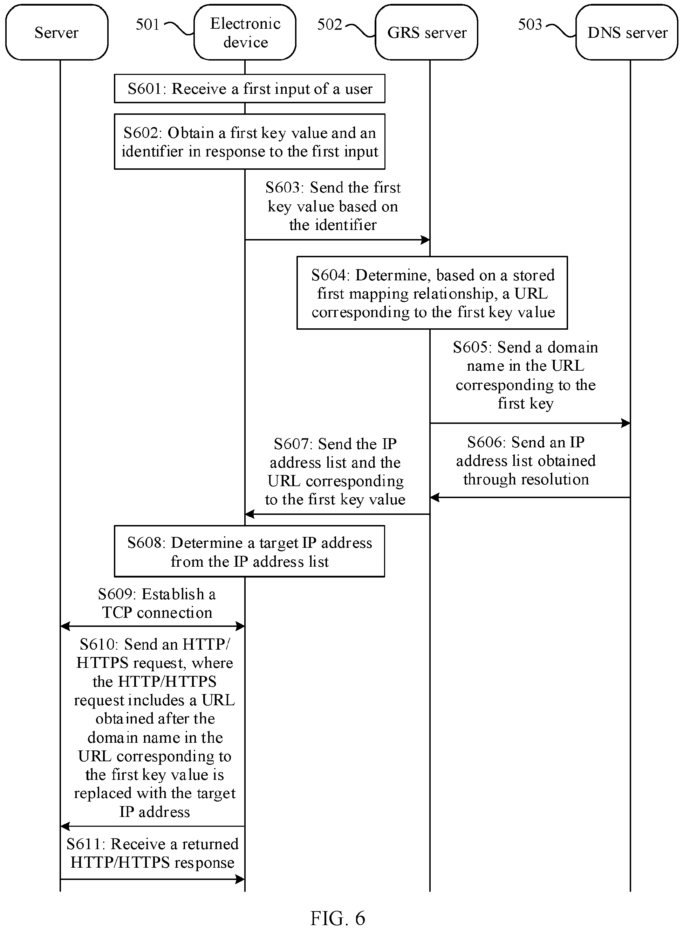

FIG. 6 is a schematic flowchart of a domain name resolution method according to the invention. The following describes, in detail with reference to the system architecture shown in FIG. 5, the domain name resolution method provided. As shown in FIG. 6, the method includes S601 to S611.

S601: The electronic device 501 receives a first input of a user.

The first input may be an input used to trigger a first application in the electronic device 501 to interact with a server deployed on the internet to provide a corresponding business service for the user. In other words, the first input may be used to trigger the electronic device 501 to provide the business service for the user by accessing a resource on the server deployed on the internet.

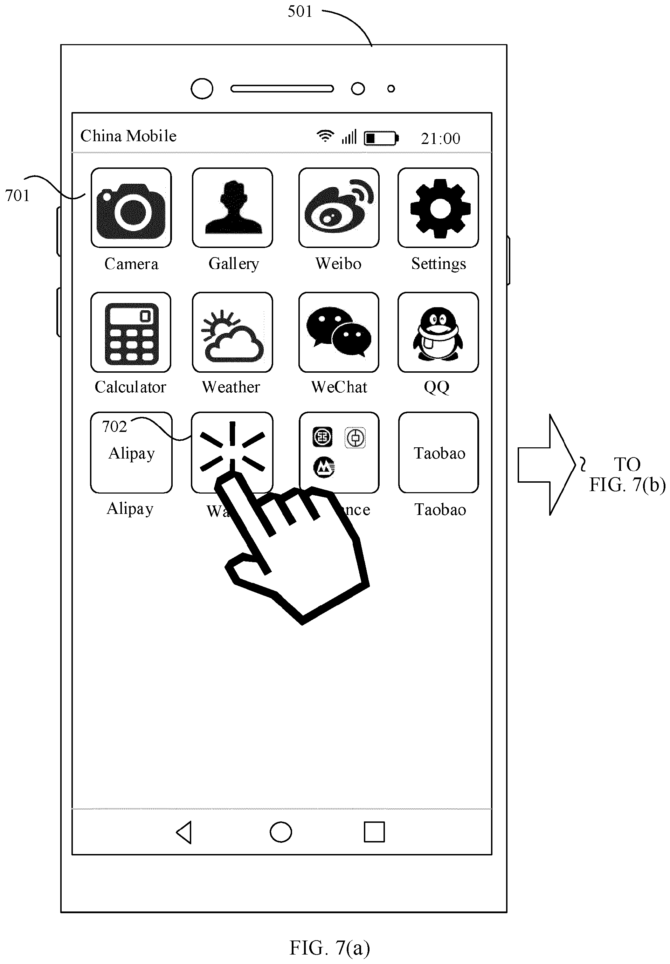

For example, the first input may be a trigger operation performed by the user on an icon that is of the first application and that is displayed on a home screen (home screen) of the electronic device 501, for example, a tap operation. The electronic device 501 may include one or more applications, and display icons of the applications on the home screen of the electronic device 501. The first application may be an application, in the applications included in the electronic device 501, that provides the corresponding business service for the user by interacting with the server deployed on the internet. The first application may be a system application or a third-party application. In some embodiments, the first application may be Browser, Walmart, Jingdong, Taobao, or the like. For example, when the user expects to use Walmart included in the electronic device 501 for shopping, the user may perform the first input. To be specific, as shown in FIG. 7(a), the user may perform a trigger operation, for example, a tap operation, on a Walmart icon 702 displayed on a home screen 701 of the electronic device 501. In this case, the electronic device 501 may receive a corresponding input.

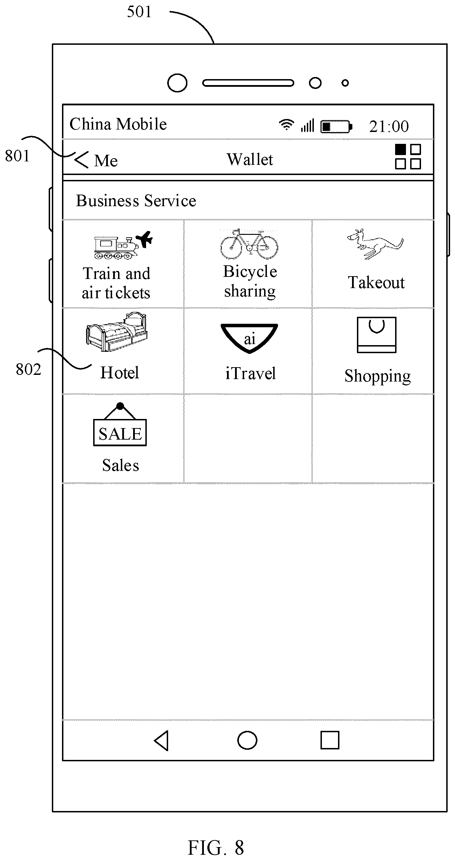

Alternatively, the first input may be a trigger operation performed by the user on a first control in an interface that is of the first application and that is displayed by the electronic device 501, for example, a tap operation. The first control may be a control used to trigger the first application of the electronic device 501 to interact with the server deployed on the internet to provide the corresponding business service for the user. For example, as shown in FIG. 8, the electronic device 501 displays a WeChat interface 801. The WeChat interface 801 includes a plurality of controls that can provide the corresponding business service for the user. For the business service, the first application of the electronic device 501 may interact with a server deployed in the cloud to provide the corresponding business service for the user. For example, when the user expects to use a hotel service to reserve a hotel, the user may perform the first input. To be specific, the user may perform a trigger operation, for example, a tap operation, on a control 802 included in the WeChat interface 801. In this case, the electronic device 501 may receive a corresponding input.

Alternatively, the first input may be another operation used to trigger the first application of the electronic device 501 to interact with the server deployed on the internet to provide the corresponding business service for the user, for example, a voice input, a gesture input, or a floating operation. This is not specifically limited in this embodiment.

Usually, an application in the electronic device may access, by using a URL, the resource on the server deployed on the internet to provide the corresponding business service for the user. The URL includes a domain name, which is used to indicate an address of a to-be-accessed server. However, the domain name may change. After the domain name changes, the electronic device needs to update the application or re-download the application, so that the application can successfully access a resource on a server that is expected to be accessed. To avoid a case in which the application needs to be updated or re-downloaded on the electronic device side due to the change of the domain name, in this embodiment, a key (key) value may be configured in a configuration file of the application. The key value may be used to indicate to provide a business (for example, a news business or a shopping business) service for the user. In some embodiments, the key value may be a single keyword. For example, the key value is a service (service) identifier, and may be a character string, a number, or the like. For example, the key value is news. In some other embodiments, the key value may alternatively be a combination of a plurality of keywords. For example, the key value includes an application name, a service name, and a service identifier.

The key value corresponds to a domain name of a server that can provide a corresponding business service. A correspondence between the key value and the domain name is stored in a server (for example, the GRS server 502). In some other embodiments, the key value corresponds to a URL of a resource used to provide a corresponding business service. The URL includes a domain name of a server that can provide a corresponding business service. A correspondence between the key value and the URL is stored in a server (for example, the GRS server 502). In this embodiment, the key value does not change with the domain name. When the domain name changes, only a corresponding correspondence in the server needs to be updated, and there is no need to update or re-download a corresponding application on the electronic device side.

An identifier of a server configured to store a correspondence (for example, the correspondence between the key value and the domain name, or the correspondence between the key value and the URL) may also be configured in the configuration file of the application.

For example, an example in which the key value corresponds to the URL of the resource used to provide the corresponding business service is used below to describe in detail a process in which the electronic device provides the corresponding business service for the user after receiving the first input.

S602: The electronic device 501 obtains a first key value and an identifier in response to the first input.

When receiving the input used to trigger the first application to interact with the server deployed on the internet to provide the corresponding business service for the user, that is, receiving the first input, the electronic device 501 may obtain the first key value and the identifier from a configuration file of the first application. The identifier is used to identify the server that stores the correspondence between the key value and the URL. The identifier may be an IP address or a domain name.

For example, with reference to the example in FIG. 7(a) in S601, after receiving the trigger operation performed by the user on the Walmart icon 702, the electronic device 501 may obtain the first key value and the identifier from a Walmart configuration file in response to the operation. For another example, with reference to the example in FIG. 8 in S601, after receiving the trigger operation performed by the user on the control 802 included in the WeChat interface 801, the electronic device may obtain the first key value and the identifier from a WeChat configuration file in response to the operation. For example, the server identified by the identifier obtained by the electronic device 501 may be the GRS server 502 shown in FIG. 5.

S603: The electronic device 501 sends the first key value to the GRS server 502 based on the identifier.

The identifier is the IP address and the electronic device 501 sends, based on the obtained IP address, the first key value to the GRS server 502 identified by the IP address.

S604: The GRS server 502 determines, based on a first mapping relationship stored in the GRS server 502, a URL corresponding to the first key value.

The first mapping relationship includes correspondences between different key values and URLs. The URL is used to identify a resource that can be used to provide a corresponding business service. The URL includes a domain name. The domain name may be used to represent a server that can provide a corresponding business service. Resources identified by the URLs corresponding to the different key values are used to provide different business services for the user. Usually, as shown in Table 1, the first mapping relationship includes correspondences between n key values and URLs. A resource identified by the URL 1 can be used to provide a first business service for the user, for example, a payment business service, a resource identified by the URL 2 can be used to provide a second business service for the user, for example, a shopping business service, ..., and a resource identified by the URL n can be used to provide an n^{th} business service for the user, for example, a news business service. After receiving the first key value, the GRS server 502 may search the first mapping relationship shown in Table 1 to determine the URL corresponding to the received first key value.

**Table 1**

| | |
|---|---|
| Key value 1 | URL 1 |
| Key value 2 | URL 2 |
| ... | ... |
| Key value n | URL n |

For example, with reference to the example in FIG. 7(a) in S601, an example in which the first key value obtained by the electronic device 501 is the key value 2, for example, shopping, is used. After receiving the key value 2 "shopping", the GRS server 502 may determine, based on the first mapping relationship shown in Table 1, a URL corresponding to the key value 2 "shopping", namely, the URL 2. For example, the URL 2 is "https://www.walmart.com/gouwu".

S605: The GRS server 502 sends the domain name in the URL corresponding to the first key value to the DNS server 503.

In some embodiments, after determining the URL corresponding to the first key value, the GRS server 502 may send a domain name resolution request including the domain name in the URL to the DNS server 503, so that the DNS server 503 performs domain name resolution. For example, with reference to the example in S604, the URL that corresponds to the first key value and that is determined by the GRS server 502 is the URL 2, namely, https://www.walmart.com/gouwu. "www.walmart.com" is a domain name included in the URL 2. The GRS server 502 may send the domain name resolution request including the domain name "www.walmart.com" to the DNS server 503.

S606: The DNS server 503 performs domain name resolution, and sends an IP address list obtained through resolution to the GRS server 502.

After receiving the domain name resolution request from the GRS server 502, the DNS server 503 may perform domain name resolution on the domain name carried in the domain name resolution request, and send the IP address list including a plurality of IP addresses obtained through resolution to the GRS server 502. For example, with reference to the example in S605, after performing domain name resolution on the domain name "www.walmart.com", the DNS server 503 obtains n IP addresses corresponding to the domain name "www.walmart.com", namely, an IP address 1, an IP address 2, ..., and an IP address n. For example, the n IP addresses are used to identify the server 1, the server 2, ..., and the server n shown in FIG. 5. The DNS server 503 may send the IP address list including the n IP addresses to the GRS server 502.

In some other embodiments, in S605, the GRS server 502 may alternatively send the determined URL corresponding to the first key value to the DNS server 503. In this way, in S606, the DNS server 503 may extract the domain name from the received URL, and then perform domain name resolution on the extracted domain name. For example, with reference to the example in S604, in S605, the GRS server 502 may send the domain name resolution request including "https://www.walmart.com/gouwu" to the DNS server 503. The DNS server 503 may extract the domain name "www.walmart.com" from "https://www.walmart.com/gouwu". The DNS server 503 performs domain name resolution on the extracted "www.walmart.com".

S607: The GRS server 502 sends the IP address list and the URL corresponding to the first key value to the electronic device 501.

In some embodiments, after receiving the IP address list sent by the DNS server 503, the GRS server 502 may send, to the electronic device 501, the received IP address list and the URL that corresponds to the first key value and that is obtained in S604. The URL corresponding to the first key value includes a domain name of a server that stores a to-be-accessed resource. For example, with reference to the examples in S604 and S606, the GRS server 502 may send, to the electronic device 501, the IP address list including the IP address 1, the IP address 2, ..., and the IP address n and the URL 2 "https://www.walmart.com/gouwu". "www.walmart.com" is the domain name of the server that stores the to-be-accessed resource.

In some other embodiments, the GRS server 502 may alternatively replace the domain name in the URL corresponding to the first key value with the plurality of IP addresses obtained through resolution in S606, and then send a URL obtained after the replacement to the electronic device 501. For example, with reference to the examples in S604 and S606, the GRS server 502 may alternatively replace the domain name "www.walmart.com" in the URL 2 "https://www.walmart.com/gouwu" with the IP address 1, the IP address 2, ..., and the IP address n, and then send a URL obtained after the replacement to the electronic device 501. In other words, the GRS server 502 sends data https://IP address 1/gouwu, https://IP address 2/gouwu, ..., and https://IP address n/gouwu to the electronic device 501.

S608: The electronic device 501 determines a target IP address from the IP address list.

The electronic device 501 may randomly select one IP address from the received IP address list as the target IP address.

In some other embodiments, after receiving the IP address list sent by the DNS server 503, the GRS server 502 may obtain a load status (for example, a quantity of devices that access a server, or a response time of a server) of a server identified by each IP address in the IP address list, and send, to the electronic device 501, the load status of the server identified by each IP address in the IP address list. In this way, the electronic device 501 may select, from the IP address list based on the load status of the server identified by each IP address in the IP address list, an IP address of a server with lightest load as the target IP address.

After determining the target IP address, the electronic device 501 provides the corresponding business service for the user by accessing a resource on the server identified by the target IP address. In some embodiments, the method may include the following steps.

S609: The electronic device 501 establishes a TCP connection to the server corresponding to the target IP address.

S610: The electronic device 501 sends a hypertext transfer protocol (HyperText Transfer Protocol, HTTP)/hypertext transfer protocol secure (Hypertext Transfer Protocol Secure, HTTPS) request to the server corresponding to the target IP address, where the HTTP/HTTPS request includes a URL obtained after the domain name in the URL corresponding to the first key value is replaced with the target IP address.

For example, the electronic device 501 may replace the domain name in the URL corresponding to the first key value with the target IP address, and then send the HTTP/HTTPS request including the URL obtained after the replacement to the server corresponding to the target IP address.

For example, with reference to the examples in FIG. 5 and S606, the electronic device 501 randomly selects the IP address 2 from the received IP address list as the target IP address. The electronic device 501 may establish a TCP connection to the server 2 based on the IP address 2. The electronic device 501 replaces the domain name "www.walmart.com" in the URL, namely, the URL 2 "https://www.walmart.com/gouwu", corresponding to the first key value with the IP address 2. The URL obtained after the replacement is "https://IP address 2/gouwu". Then, the electronic device 501 may send the HTTP/HTTPS request including the URL "https://IP address 2/gouwu" obtained after the replacement to the server 2.

S611: The electronic device 501 receives an HTTP/HTTPS response returned by the server corresponding to the target IP address.

The HTTP/HTTPS response includes the resource identified by the URL corresponding to the first key value.

After receiving the HTTP/HTTPS request sent by the electronic device 501, the server corresponding to the target IP address may obtain, based on the HTTP/HTTPS request, the resource identified by the URL corresponding to the first key value, and send the HTTP/HTTPS response including the obtained resource to the electronic device 501. After receiving the HTTP/HTTPS response, the electronic device 501 may provide a corresponding business service for the user based on the resource carried in the HTTP/HTTPS response.

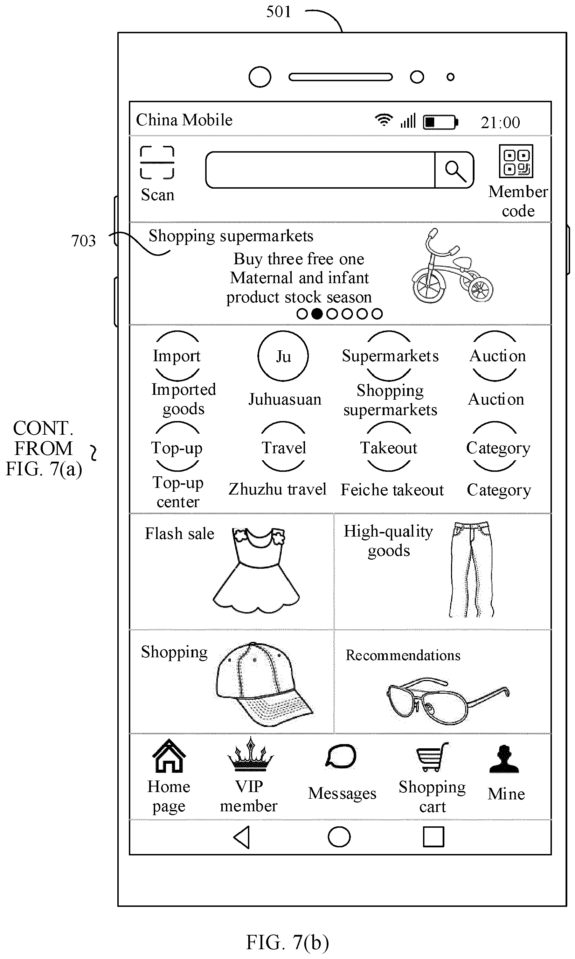

For example, with reference to the examples in S606 and S610, after receiving the HTTP/HTTPS request carrying "https://IP address 2/gouwu", the server 2 may obtain a corresponding resource based on the HTTP/HTTPS request, and sends the HTTP/HTTPS response including the resource to the electronic device 501. After receiving the HTTP/HTTPS response, the electronic device 501 may provide a shopping business service for the user based on the resource carried in the HTTP/HTTPS response. For example, as shown in FIG. 7(b), the electronic device 501 may display a Walmart home page 703, to facilitate purchasing of the user.

In some embodiments, in S606, after obtaining the plurality of IP addresses through domain name resolution, the DNS server 503 may alternatively not return the IP address list including the plurality of IP addresses to the GRS server 502, but returns one of the plurality of IP addresses to the GRS server 502. The GRS server 502 may send the IP address and the URL corresponding to the first key value to the electronic device 501 (or replace the domain name in the URL corresponding to the first key value with the IP address and then send a URL obtained after the replacement to the electronic device 501). In this way, the electronic device 501 may interact with the corresponding server based on the IP address, to provide a corresponding business service for the user.

In some other embodiments, after receiving the IP address list sent by the DNS server 503, the GRS server 502 may alternatively correspondingly store, in the GRS server 502, the IP address list and the domain name in the URL corresponding to the first key. In this way, when the GRS server 502 needs to subsequently perform domain name resolution, the GRS server 502 may first search the GRS server 502 for a corresponding IP address list. If the corresponding IP address list is found in the GRS server 502, there is no need to access the DNS server 503 to perform domain name resolution, and the IP address list found in the GRS server 502 is directly returned to the electronic device 501. Therefore, a domain name resolution time can be shortened, so that a response time of the electronic device is shortened. In addition, a correspondence between the domain name and the IP address list that are stored in the GRS server 502 may be periodically updated. For example, the GRS server 502 periodically sends the domain name resolution request carrying the domain name to the DNS server 503. After performing domain name resolution, the DNS server 503 returns the IP address list to the GRS server 502. The GRS server 502 updates, based on the received IP address list, the correspondence between the domain name and the IP address list that are stored in the GRS server 502.

In some other embodiments, the foregoing system architecture may further include a DNS server keeper. When the DNS server 503 is hijacked, the DNS server keeper may be used as a standby DNS server to provide a domain name resolution service for the electronic device 501. For example, after the electronic device 501 determines the target IP address, if the server corresponding to the target IP address fails to be accessed (for example, a response times out, or verification on a returned resource fails), the electronic device 501 may send a notification message to the GRS server 502, to notify the GRS server 502 that the server fails to be accessed. The GRS server 502 may send the domain name in the URL corresponding to the first key value (or the URL corresponding to the first key value) to the DNS server keeper, so that the DNS server keeper performs domain name resolution again to obtain a new IP address list. After receiving the new IP address list, the GRS server 502 may send the new IP address list to the electronic device 501, so that the electronic device 501 can access a corresponding server based on the new IP address list, to provide a corresponding business service for the user.

It should be noted that an example in which the key value in the configuration file corresponds to the URL of the resource used to provide the corresponding business service is used in S602 to S611 to describe a process in which the electronic device 501 provides the corresponding business service for the user after receiving the first input. In a scenario in which the key value in the configuration file corresponds to the domain name of the server that can provide the corresponding business service, a process of providing the corresponding business service for the user in response to the first input is similar to that in the descriptions in S602 to S611. Differences are as follows:

Difference 1: In S602, after receiving the first input, the electronic device 501 may obtain the first key value and the identifier from the configuration file of the first application. The first key value is included in information in the configuration file. For example, with reference to the example in FIG. 7(a) and FIG. 7(b) in S601, the Walmart configuration file includes information "https://first key value/gouwu". The information includes the first key value.

Difference 2: In S604, after receiving the first key value, the GRS server 502 may determine, based on a second mapping relationship stored in the GRS server 502, a domain name corresponding to the first key value. The second mapping relationship includes correspondences between different key values and domain names. Servers represented by the domain names corresponding to the different key values can provide different business services for the user. Usually, as shown in Table 2, the second mapping relationship includes correspondences between n key values and domain names. A server represented by the domain name 1 can provide a first business service, for example, a payment business service, a server represented by the domain name 2 can provide a second business service, for example, a shopping business service, ..., and a server represented by the domain name n can provide an n^{th} business service, for example, a news business service. After receiving the first key value, the GRS server 502 may search the second mapping relationship shown in Table 2 to determine the domain name corresponding to the received first key value.

**Table 2**

| | |
|---|---|
| Key value 1 | Domain name 1 |
| Key value 2 | Domain name 2 |
| ... | ... |
| Key value n | Domain name n |

For example, with reference to the example in FIG. 7(a) and FIG. 7(b) in S601, an example in which the first key value obtained by the electronic device 501 is the key value 2, for example, shopping, is used. After receiving the key value 2 "shopping", the GRS server 502 may determine, based on the second mapping relationship shown in Table 2, a domain name corresponding to the key value 2 "shopping", namely, the domain name 2. For example, the domain name 2 is www.walmart.com.

Difference 3: In S605, the GRS server 502 sends the obtained domain name corresponding to the first key to the DNS server 503.

Difference 4: In S607, after obtaining the IP address list, the GRS server 502 may send the IP address list to the electronic device 501.

Difference 5: In S610, the electronic device 501 may obtain, based on the target IP address and the information including the first key value that are in the configuration file, a URL that needs to be carried in the HTTP/HTTPS request. For example, the information including the first key value is "https://first key value/gouwu", and the target IP address is the IP address 2. The electronic device 501 obtains the URL "https://IP address 2/gouwu". The electronic device 501 may send the HTTP/HTTPS request including the URL "https://IP address 2/gouwu" to the server corresponding to the target IP address.

According to the domain name resolution method provided in this embodiment, when the electronic device needs to provide the business service for the user by accessing the resource on the server deployed on the internet, the electronic device sends, to the GRS server, the key value used to indicate to provide the corresponding business service for the user. After receiving the key value sent by the electronic device, the GRS server obtains the domain name corresponding to the key value or the URL including the domain name, and sends the domain name to the DNS server for domain name resolution, to obtain a corresponding IP address. Compared with a case in which the electronic device sends the domain name to the DNS server for domain name resolution, in this case, because a quantity of GRS servers deployed in a network is less than a quantity of electronic devices, the GRS server performs load balancing control, and the GRS server has stronger security assurance and anti-attack means, it is difficult to attack the GRS server. In addition, in this embodiment, the electronic device sends the key value to the GRS server. Even if the GRS server is attacked and an insecure server intercepts the key value, the insecure server cannot perform domain name resolution. In addition, because security of transmission between the GRS server and the DNS server is relatively high, security of a link between the electronic device and the DNS server is relatively high. Therefore, the key value is sent to the GRS server for domain name resolution, so that proper business running on the electronic device can be ensured, network security is ensured, and user privacy is protected. In addition, because the electronic device does not need to access the DNS server to implement domain name resolution, a delay of accessing, by the electronic device, the resource on the server deployed on the internet is reduced, and access performance is improved.

In addition, the GRS server sends the IP address list including the plurality of IP addresses to the electronic device. In this way, the electronic device selects one IP address from the IP address list as the target IP address, and accesses the server corresponding to the target IP address to provide the corresponding business service for the user, thereby implementing load balancing.

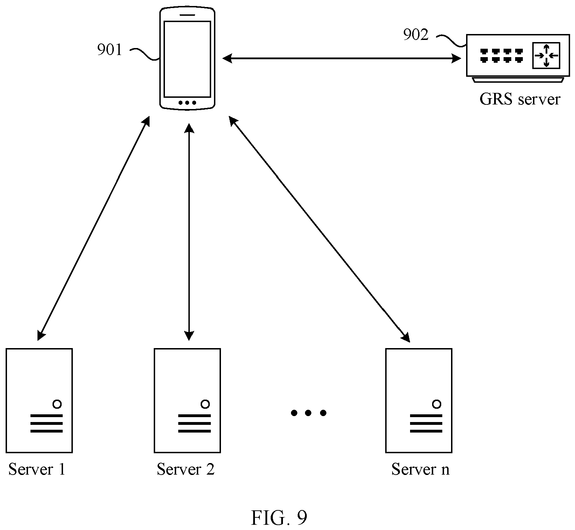

FIG. 9 is another schematic diagram of a system architecture to which a domain name resolution method may be applied according to an embodiment. The system architecture may include an electronic device 901, a GRS server 902, and n servers deployed on the internet. The n servers deployed on the internet are a server 1, a server 2, ..., and a server n. For a specific structure of the electronic device 901, refer to the electronic device 200 shown in FIG. 2. For specific structures of the GRS server 902 and the n servers deployed on the internet, refer to the computer system 400 shown in FIG. 4.

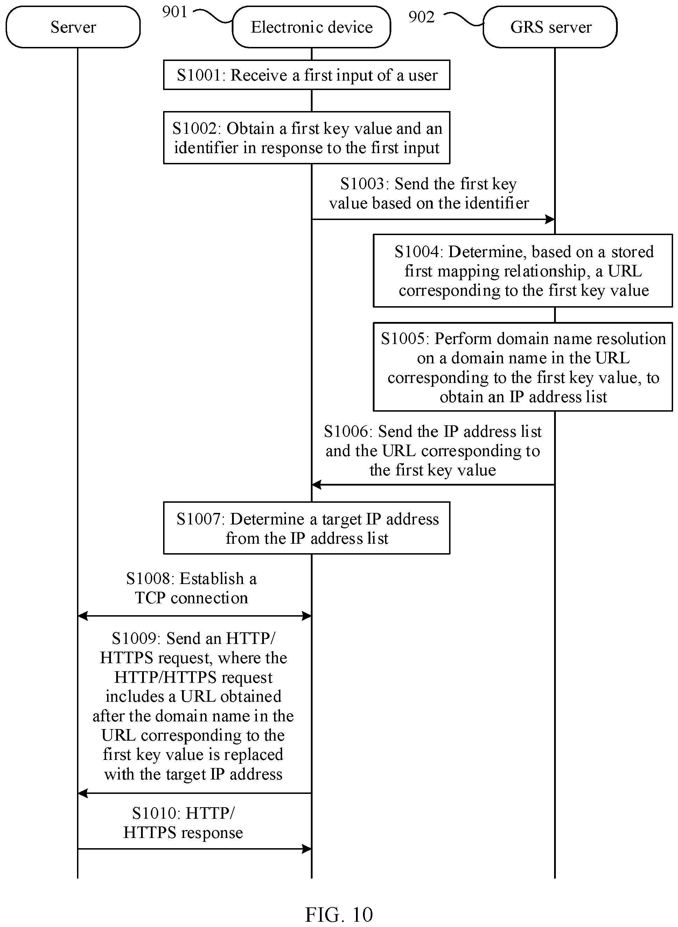

FIG. 10 is another schematic flowchart of a domain name resolution method according to an embodiment. The following describes, in detail with reference to the system architecture shown in FIG. 9, the domain name resolution method provided in this embodiment. As shown in FIG. 10, the method may include S1001 to S1010.

S1001: The electronic device 901 receives a first input of a user.

The first input may be an input used to trigger a first application in the electronic device 901 to interact with a server deployed on the internet to provide a corresponding business service for the user. In other words, the first input may be used to trigger the electronic device 501 to provide the business service for the user by accessing a resource on the server deployed on the internet. For specific descriptions of S1001, refer to the specific descriptions of S601 in the another embodiment of this application. Details are not described herein again.

In this embodiment, a key value is configured in a configuration file of an application. The key value may be used to indicate to provide a business service for the user. The key value may be a single keyword or a combination of a plurality of keywords. In some embodiments, the key value corresponds to a domain name of a server that can provide a corresponding business service. A correspondence between the key value and the domain name may be stored in a server (for example, the GRS server 902). In some other embodiments, the key value corresponds to a URL of a resource used to provide a corresponding business service. The URL includes a domain name of a server that can provide a corresponding business service. A correspondence between the key value and the URL may be stored in a server (for example, the GRS server 902). In some other embodiments, the key value corresponds to an IP address of a server that can provide a corresponding business service. There may be a plurality of servers that can provide the corresponding business service. In other words, one key value may correspond to a plurality of IP addresses. A correspondence between the key value and the IP address may be stored in a server (for example, the GRS server 902). An identifier of a server configured to store a correspondence (for example, the correspondence between the key value and the domain name, the correspondence between the key value and the URL, or the correspondence between the key value and the IP address) may also be configured in the configuration file of the application.

For example, an example in which the key value corresponds to the URL of the resource used to provide the corresponding business service is used below to describe in detail a process in which the electronic device provides the corresponding business service for the user after receiving the first input.

S1002: The electronic device 901 obtains a first key value and an identifier in response to the first input.

For example, a server identified by the identifier obtained by the electronic device 901 may be the GRS server 902 shown in FIG. 9.

S1003: The electronic device 901 sends the first key value to the GRS server 902 based on the identifier.

S1004: The GRS server 902 determines, based on a first mapping relationship stored in the GRS server 902, a URL corresponding to the first key value.

For specific descriptions of S1002 to S1004, refer to the specific descriptions of the corresponding content in S602 to S604 in the another embodiment of this application. Details are not described herein again.

S1005: The GRS server 902 performs domain name resolution on a domain name in the URL corresponding to the first key value, to obtain an IP address list.

S1006: The GRS server 902 sends the IP address list and the URL corresponding to the first key value to the electronic device 901.

After determining the URL corresponding to the first key value, the GRS server 902 may perform domain name resolution on the domain name in the URL. For example, the GRS server 902 performs domain name resolution to obtain a plurality of IP addresses. In some embodiments, the GRS server 902 may send the IP address list including the plurality of IP addresses to the electronic device 901. The GRS server 902 may further send the URL corresponding to the first key value to the electronic device 901. The URL corresponding to the first key value includes a domain name of a server that stores a to-be-accessed resource. In some other embodiments, the GRS server 902 may alternatively replace the domain name in the URL corresponding to the first key value with the plurality of IP addresses obtained through resolution, and then send a URL obtained after the replacement to the electronic device 901. For a specific example, refer to the specific descriptions of the corresponding example in S607 in the foregoing embodiment. Details are not described herein again.

S1007: The electronic device 901 determines a target IP address from the IP address list.

After determining the target IP address, the electronic device 901 may provide the corresponding business service for the user by accessing a resource on a server identified by the target IP address. In some embodiments, the method may include the following steps:
S1008: The electronic device 901 establishes a TCP connection to the server corresponding to the target IP address.
S1009: The electronic device 901 sends an HTTP/HTTPS request to the server corresponding to the target IP address, where the HTTP/HTTPS request includes a URL obtained after the domain name in the URL corresponding to the first key value is replaced with the target IP address.
S1010: The electronic device 901 receives an HTTP/HTTPS response returned by the server corresponding to the target IP address.

For specific descriptions of S1007 to S1010, refer to the specific descriptions of the corresponding content in S608 to S611 in the another embodiment of this application. Details are not described herein again.

It should be noted that an example in which the key value in the configuration file corresponds to the URL of the resource used to provide the corresponding business service is used in S1002 to S1010 to describe a process in which the electronic device 901 provides the corresponding business service for the user after receiving the first input. In a scenario in which the key value in the configuration file corresponds to the domain name of the server that can provide the corresponding business service, a process of providing the corresponding business service for the user in response to the first input is similar to that in the descriptions in S1002 to S1010. For differences, refer to the specific descriptions of the corresponding content in the embodiment shown in FIG. 6. Details are not described herein again. In addition, in a scenario in which the key value in the configuration file corresponds to the IP address of the server that can provide the corresponding business service, a process of providing the corresponding business service for the user in response to the first input is similar to that in the descriptions in S1002 to S1010. A difference lies in that the GRS server 902 may determine, in S1004 based on the mapping relationship stored in the GRS server 902, the IP address list corresponding to the first key value, and may not perform S1005. In this scenario, a URL that needs to be carried in the HTTP/HTTPS request may be obtained in the following two implementations. Implementation 1: The GRS server 902 stores the correspondence between the key value and the URL. Based on the correspondence, the GRS server 902 may return the URL corresponding to the first key value to the electronic device 901. The electronic device 901 may replace the domain name in the URL with the target IP address, to obtain the URL that needs to be carried in the HTTP/HTTPS request. Implementation 2: Information including the first key value is configured in the configuration file of the electronic device 901, for example, "https://first key value/gouwu". The electronic device 901 may replace the "first key value" in the information with the target IP address, to obtain the URL that needs to be carried in the HTTP/HTTPS request. In this implementation, in S1003, the electronic device 901 may send the information, for example, "https://first key value/gouwu", including the first key value to the GRS server 902, or may send only the first key to the GRS server 902, so that the GRS server 902 can perform domain name resolution.

According to the domain name resolution method provided in this embodiment, when the electronic device needs to provide the business service for the user by accessing the resource on the server deployed on the internet, the electronic device sends, to the GRS server, the key value used to indicate to provide the corresponding business service for the user. After receiving the key value sent by the electronic device, the GRS server obtains the domain name corresponding to the key value or the URL including the domain name, and performs domain name resolution on the domain name, to obtain a corresponding IP address. Compared with a case in which the electronic device sends the domain name to the DNS server for domain name resolution, in this case, because a quantity of GRS servers deployed in a network is less than a quantity of electronic devices, the GRS server performs load balancing control, and the GRS server has stronger security assurance and anti-attack means, it is difficult to attack the GRS server. In addition, in this embodiment, the electronic device sends the key value to the GRS server. Even if the GRS server is attacked and an insecure server intercepts the key value, the insecure server cannot perform domain name resolution. Therefore, the key value is sent to the GRS server for domain name resolution, so that proper business running on the electronic device can be ensured, network security is ensured, and user privacy is protected. In addition, because the electronic device does not need to access the DNS server to implement domain name resolution, a delay of accessing, by the electronic device, the resource on the server deployed on the internet is reduced, and access performance is improved. Moreover, in this embodiment, the GRS server implements domain name resolution, thereby reducing a quantity of times of interaction between the GRS server and the DNS server, avoiding a risk of hijacking the DNS server, further ensuring network security, and protecting user privacy.

In addition, the GRS server sends the IP address list including the plurality of IP addresses to the electronic device. In this way, the electronic device selects one IP address from the IP address list as the target IP address, and accesses the server corresponding to the target IP address to provide the corresponding business service for the user, thereby implementing load balancing.

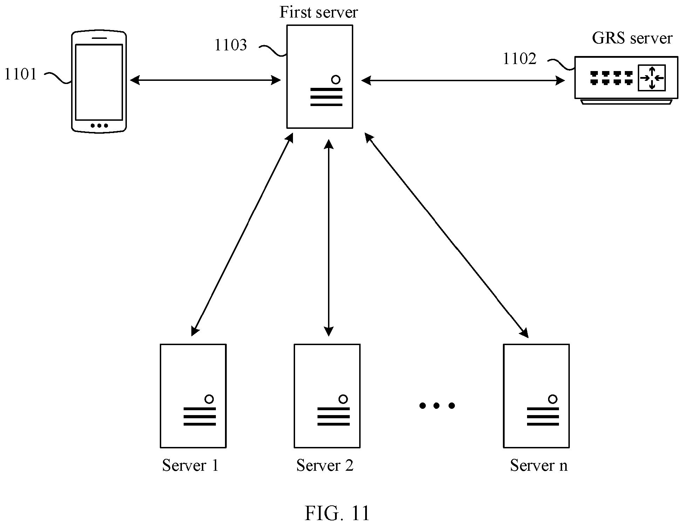

FIG. 11 is still another schematic diagram of a system architecture to which a domain name resolution method may be applied according to an embodiment. The system architecture may include an electronic device 1101, a GRS server 1102, a first server 1103, and n second servers deployed on the internet. The n second servers deployed on the internet are a server 1, a server 2, ..., and a server n. For a specific structure of the electronic device 1101, refer to the electronic device 200 shown in FIG. 2. For specific structures of the GRS server 1102, the first server 1103, and the n second servers deployed on the internet, refer to the computer system 400 shown in FIG. 4.

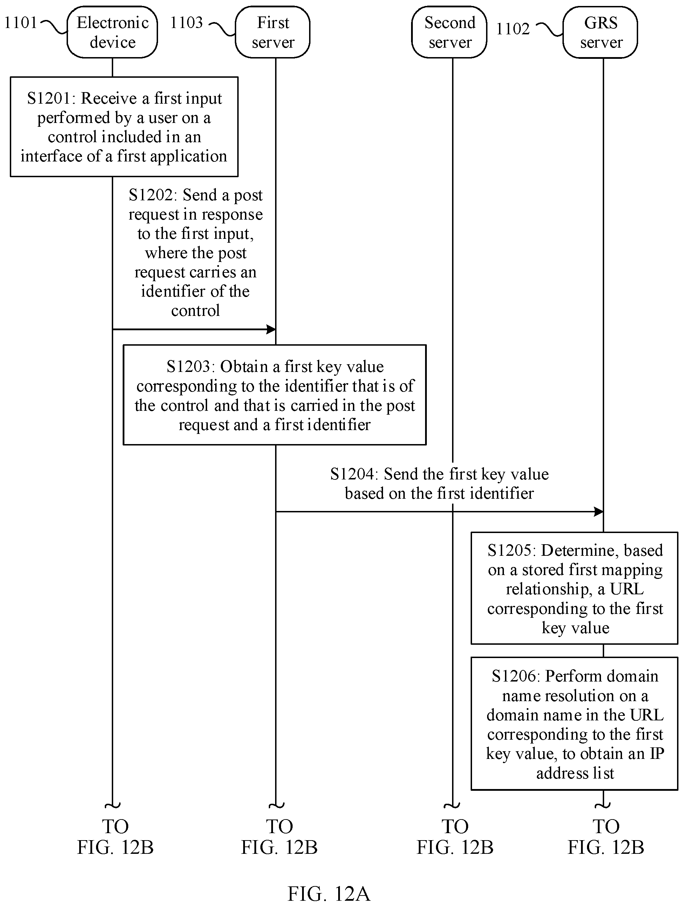

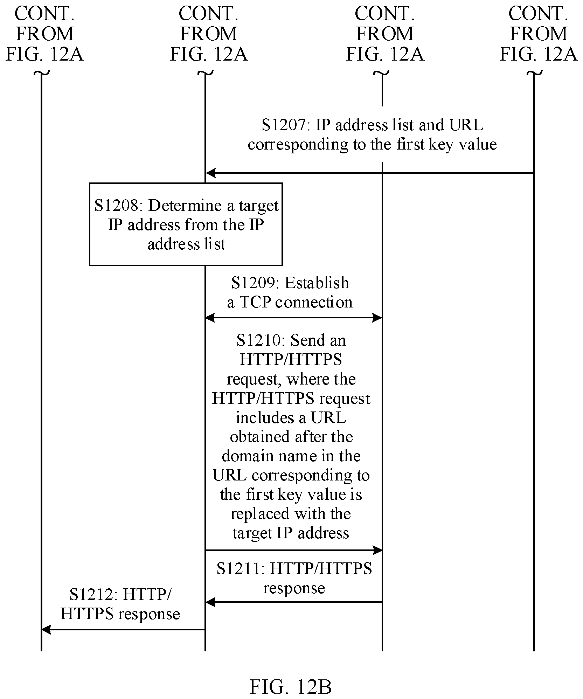

FIG. 12A and FIG. 12B are still another schematic flowchart of a domain name resolution method according to an embodiment. The following describes, in detail with reference to the system architecture shown in FIG. 11, the domain name resolution method provided in this embodiment. As shown in FIG. 12A and FIG. 12B, the method may include S1201 to S1212.

S1201: The electronic device 1101 receives a first input performed by a user on a control included in an interface of a first application.

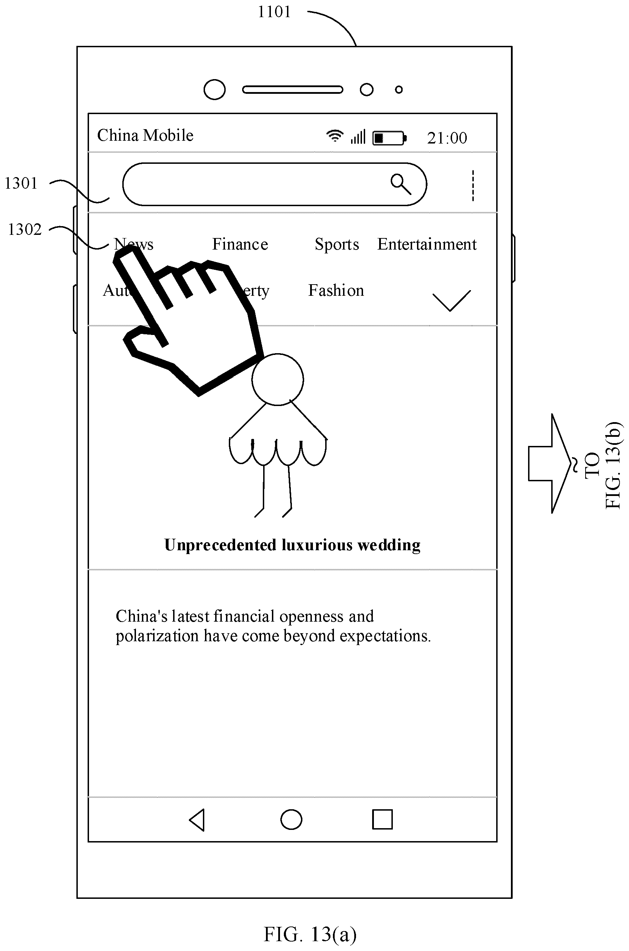

The control may be a control used to trigger the first application to interact with a server deployed on the internet to provide a corresponding business service for the user. For example, the first application is Browser. As shown in FIG. 13(a), the electronic device 1101 displays a Browser interface 1301. When the user expects to browse news, the user may perform the first input, for example, a tap operation, on a news control 1302 in the Browser interface 1301.

S1202: The electronic device 1101 sends a post request to the first server 1103 in response to the first input, where the post request carries an identifier of the control.

S1203: The first server 1103 obtains a first key value corresponding to the identifier that is of the control and that is carried in the post request and a first identifier.

For example, the first server 1103 includes a correspondence between the identifier of the control included in the interface of the first application and the key value. For example, the correspondence stored in the first server 1103 is shown in Table 3.

**Table 3**

| | |
|---|---|
| Identifier of a control 1 | Key value 1 |
| Identifier of a control 2 | Key value 2 |
| ... | ... |
| Identifier of a control n | Key value n |

The first server 1103 may determine, based on the correspondence shown in Table 3, the first key value corresponding to the identifier that is of the control and that is carried in the post request. For example, with reference to the example in S1201, the first key value determined by the first server 1103 is the key value n, for example, news.

The key value may be used to indicate to provide a business service for the user. In some embodiments, the key value corresponds to a domain name of a server that can provide a corresponding business service. A correspondence between the key value and the domain name may be stored in a server (for example, the GRS server 1102). In some other embodiments, the key value corresponds to a URL of a resource used to provide a corresponding business service. The URL includes a domain name of a server that can provide a corresponding business service. A correspondence between the key value and the URL may be stored in a server (for example, the GRS server 1102). In some other embodiments, the key value corresponds to an IP address of a server that can provide a corresponding business service. There may be a plurality of servers that can provide the corresponding business service. In other words, one key value may correspond to a plurality of IP addresses. A correspondence between the key value and the IP address may be stored in a server (for example, the GRS server 1102). In addition, the first server 1103 further includes an identifier of a server configured to store a correspondence (for example, the correspondence between the key value and the domain name, the correspondence between the key value and the URL, or the correspondence between the key value and the IP address), for example, the first identifier. The first identifier may be an IP address or a domain name. For example, the server identified by the first identifier may be the GRS server 1102 shown in FIG. 11.

For example, an example in which the key value corresponds to the URL of the resource used to provide the corresponding business service is used below to describe in detail a process in which the first server 1103 provides the corresponding business service for the user after obtaining the first key value.

S1204: The first server 1103 sends the first key value to the GRS server 1102 based on the first identifier.

In some embodiments, if the first identifier is the IP address, the first server 1103 may send, based on the obtained IP address, the first key value to the GRS server 1102 identified by the IP address. If the first identifier is the domain name, the first server 1103 may first send a domain name resolution request carrying the domain name to a DNS server, so that the DNS server performs domain name resolution and returns a corresponding IP address. Then, the first server 1103 may send, based on the IP address returned by the DNS server, the first key value to the GRS server 1102 identified by the IP address.

S1205: The GRS server 1102 determines, based on a first mapping relationship stored in the GRS server 1102, a URL corresponding to the first key value.

For specific descriptions of S1205, refer to the specific descriptions of the corresponding content in S604 in the another embodiment of this application. Details are not described herein again. For example, with reference to the example in S1203, after receiving the key value n, for example, news, the GRS server 1102 may determine, based on the first mapping relationship shown in Table 1, a URL corresponding to the key value n "news", namely, the URL n. For example, the URL n is "https://news.huawei.com/".

S1206: The GRS server 1102 performs domain name resolution on a domain name in the URL corresponding to the first key, to obtain an IP address list.

S1207: The GRS server 1102 sends the IP address list and the URL corresponding to the first key value to the first server 1103.

After determining the URL corresponding to the first key value, the GRS server 1102 may perform S1206 to perform domain name resolution to obtain the IP address list. In an alternative solution, the GRS server 1102 may alternatively send the domain name in the URL corresponding to the first key to the DNS server, so that the DNS server performs domain name resolution on the received domain name, and returns the IP address list obtained through resolution to the GRS server 1102. Alternatively, the GRS server 1102 may send the URL corresponding to the first key to the DNS server, so that the DNS server performs domain name resolution.

In some embodiments, the GRS server 1102 may send the IP address list to the first server 1103. The GRS server 1102 may further send the URL corresponding to the first key value to the first server 1103. In some other embodiments, the GRS server 1102 may alternatively replace the domain name in the URL corresponding to the first key value with the IP address in the IP address list, and then send a URL obtained after the replacement to the first server 1103. For a specific example, refer to the specific descriptions of the corresponding example in S607 in the foregoing embodiment. Details are not described herein again.

S1208: The first server 1103 determines a target IP address from the IP address list.

S1209: The first server 1103 establishes a TCP connection to the second server corresponding to the target IP address.

S1210: The first server 1103 sends an HTTP/HTTPS request to the second server corresponding to the target IP address, where the HTTP/HTTPS request includes a URL obtained after the domain name in the URL corresponding to the first key value is replaced with the target IP address.

For specific descriptions of S1208 to S1210, refer to the specific descriptions of the corresponding content in S608 to S610 in the another embodiment of this application. Details are not described herein again.

S1211: The first server 1103 receives an HTTP/HTTPS response returned by the second server corresponding to the target IP address.

S1212: The first server 1103 sends the HTTP/HTTPS response to the electronic device 1101.

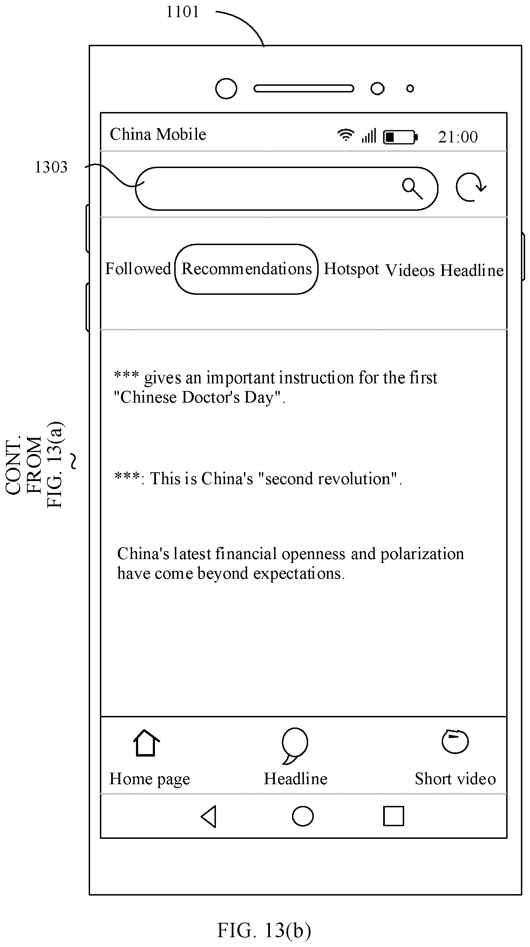

After receiving the HTTP/HTTPS response returned by the second server corresponding to the target IP address, the first server 1103 may send the HTTP/HTTPS response to the electronic device 1101. The electronic device 1101 may provide a corresponding business service for the user based on a resource carried in the HTTP/HTTPS response. For example, with reference to the example in S1205, the HTTP/HTTPS response returned by the second server corresponding to the target IP address carries a resource corresponding to a news business. As shown in FIG. 13(b), the electronic device 1101 may display, based on the resource, a news page 1303 for the user to browse.

In addition, in some embodiments, after receiving the IP address list and the URL corresponding to the first key value, the first server 1103 may alternatively send the IP address list and the URL corresponding to the first key value to the electronic device 1101, so that the electronic device 1101 accesses, based on the IP address list and the URL corresponding to the first key value, a corresponding server to provide a corresponding business service for the user.

It should be noted that an example in which the key value corresponds to the URL of the resource used to provide the corresponding business service is used in S1204 to S1212 to describe a process in which the first server 1103 provides the corresponding business service for the user after obtaining the first key value. In a scenario in which the key value corresponds to the domain name of the server that can provide the corresponding business service, a process in which the first server 1103 provides the corresponding business service for the user after obtaining the first key value is similar to that in the descriptions in S1204 to S1212. Differences are as follows:

Difference 1: In S1203, after receiving the post request, the first server 1103 may obtain the first key value corresponding to the identifier that is of the control and that is carried in the post request and the first identifier. The first key value is included in information. For example, the first key value is included in information "https://first key value/".

Difference 2: In S1205, after receiving the first key value, the GRS server 1102 may determine, based on a second mapping relationship stored in the GRS server 1102, a domain name corresponding to the first key value. For specific descriptions of determining, based on the second mapping relationship, the domain name corresponding to the first key value, refer to the specific descriptions of the corresponding content in the foregoing embodiment. Details are not described herein again.

Difference 3: In S1206, the GRS server 1102 performs domain name resolution on the domain name corresponding to the first key, to obtain an IP address list.

Difference 4: In S1207, after obtaining the IP address list, the GRS server 1102 may send the IP address list to the first server 1103.

Difference 5: In S1210, the first server 1103 may obtain a URL based on the information including the first key value and the target IP address. For example, the information including the first key value is "https://first key value!", and the target IP address is the IP address n. The first server 1103 obtains the URL "https://IP address n/". The first server 1103 may send the HTTP/HTTPS request including the URL "https://IP address n/" to the server corresponding to the target IP address.

In addition, in a scenario in which the key value in the configuration file corresponds to the IP address of the server that can provide the corresponding business service, a process in which the first server 1103 provides the corresponding business service for the user after obtaining the first key value is similar to that in the descriptions in S1204 to S1212. A difference lies in that the GRS server 1102 may determine, in S1205 based on the mapping relationship stored in the GRS server 1102, the IP address list corresponding to the first key value, and may not perform S 1206. In this scenario, for a manner of obtaining a URL that needs to be carried in the HTTP/HTTPS request, refer to the specific descriptions of the corresponding content in the embodiment shown in FIG. 10. Details are not described herein again.

According to the domain name resolution method provided in this embodiment, when the electronic device needs to provide the business service for the user by accessing the resource on the server deployed on the internet, after the electronic device sends the identifier of the control triggered by the user to the first server, the first server may determine the key value corresponding to the identifier of the control. The key value is used to indicate to provide the corresponding business service for the user. The first server sends the key value to the GRS server. After receiving the key value sent by the electronic device, the GRS server obtains the domain name corresponding to the key value or the URL including the domain name, and directly performs domain name resolution on the domain name, to obtain a corresponding IP address. Compared with a case in which the electronic device sends the domain name to the DNS server for domain name resolution, in this case, because a quantity of GRS servers deployed in a network is less than a quantity of electronic devices, the GRS server performs load balancing control, and the GRS server has stronger security assurance and anti-attack means, it is difficult to attack the GRS server. In addition, in this embodiment, the electronic device sends the key value to the GRS server. Even if the GRS server is attacked and an insecure server intercepts the key value, the insecure server cannot perform domain name resolution. Therefore, the key value is sent to the GRS server for domain name resolution, so that proper business running on the electronic device can be ensured, network security is ensured, and user privacy is protected. In addition, because the electronic device does not need to access the DNS server to implement domain name resolution, a delay of accessing, by the electronic device, the resource on the server deployed on the internet is reduced, and access performance is improved. Moreover, in this embodiment, the GRS server implements domain name resolution, thereby reducing a quantity of times of interaction between the GRS server and the DNS server, avoiding a risk of hijacking the DNS server, further ensuring network security, and protecting user privacy.

In addition, the GRS server sends the IP address list including the plurality of IP addresses to the electronic device. In this way, the electronic device selects one IP address from the IP address list as the target IP address, and accesses the server corresponding to the target IP address to provide the corresponding business service for the user, thereby implementing load balancing.

It should be understood that descriptions of technical features, technical solutions, or similar words in this application do not imply that all features can be implemented in any individual embodiment. Further, the technical features and the technical solutions described in the embodiments may be combined in any proper manner.

It may be understood that to implement the foregoing functions, the electronic device or the server (such as the GRS server or the DNS server) includes corresponding hardware structures and/or software modules for performing the functions. A person skilled in the art should be easily aware that units, algorithms, and steps in the examples described with reference to the embodiments disclosed in this specification can be implemented by hardware or a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

Embodiments of this application further provide an electronic device and a GRS server that implement the foregoing method embodiments. Specifically, the electronic device or the GRS server may be divided into function modules. For example, each function module may be obtained through division based on each corresponding function, or two or more functions may be integrated into one processing module. The integrated module may be implemented in a form of hardware, or may be implemented in a form of a software function module. It should be noted that in the embodiments of this application, division into the modules is an example and is merely logical function division, and may be other division in an actual implementation.

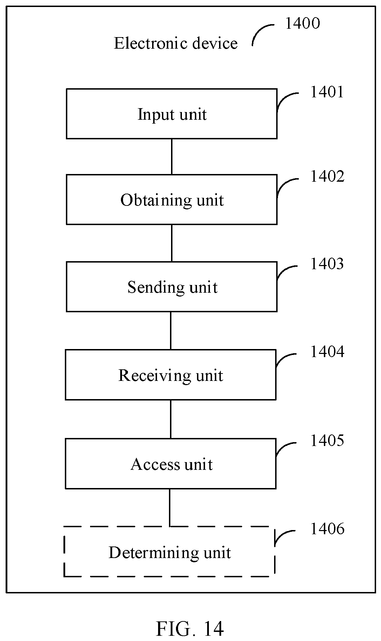

When each function module is obtained through division based on each corresponding function, FIG. 14 is a possible schematic structural diagram of an electronic device 1400 according to an embodiment. The electronic device 1400 may include an input unit 1401, an obtaining unit 1402, a sending unit 1403, a receiving unit 1404, and an access unit 1405.

The input unit 1401 is configured to receive an input of a user, such as a touch input, a voice input, a gesture input, or a floating operation. For example, the input unit 1401 is configured to support the electronic device 1400 in performing S601, S1001, and S1201 in the foregoing method embodiments, and/or is configured to perform another process of the technology described in this specification. The input unit 1401 may be a touchscreen, other hardware, or a combination of hardware and software.

The obtaining unit 1402 is configured to support the electronic device 1400 in performing S602 and S1002 in the foregoing method embodiments, and/or is configured to perform another process of the technology described in this specification.

The sending unit 1403 is configured to support the electronic device 1400 in performing S603, S610, S1003, S1009, and S1202 in the foregoing method embodiments, and/or is configured to perform another process of the technology described in this specification.

The receiving unit 1404 is configured to support the electronic device 1400 in performing S611 and S1010 in the foregoing method embodiments, and/or is configured to perform another process of the technology described in this specification.

The access unit 1405 is configured to support the electronic device 1400 in performing the operation of accessing the server deployed on the internet in the foregoing method embodiments, and/or is configured to perform another process of the technology described in this specification.

In this embodiment of this application, as shown in FIG. 14, the electronic device 1400 may further include a determining unit 1406.

The determining unit 1406 is configured to support the electronic device 1400 in performing S608 and S1007 in the foregoing method embodiments, and/or is configured to perform another process of the technology described in this specification.

All related content of the steps in the foregoing method embodiments may be cited in function descriptions of corresponding function modules. Details are not described herein again.

Certainly, the electronic device 1400 includes but is not limited to the unit modules listed above. For example, the electronic device 1400 may further include a storage unit configured to store program code and data, an establishment unit configured to establish a TCP connection to a server, and the like. In addition, functions that can be specifically implemented by the function units include but are not limited to functions corresponding to the method steps in the foregoing instances. For detailed descriptions of other units of the electronic device 1400, refer to the detailed descriptions of the method steps corresponding to the units. Details are not described herein again in this embodiment.

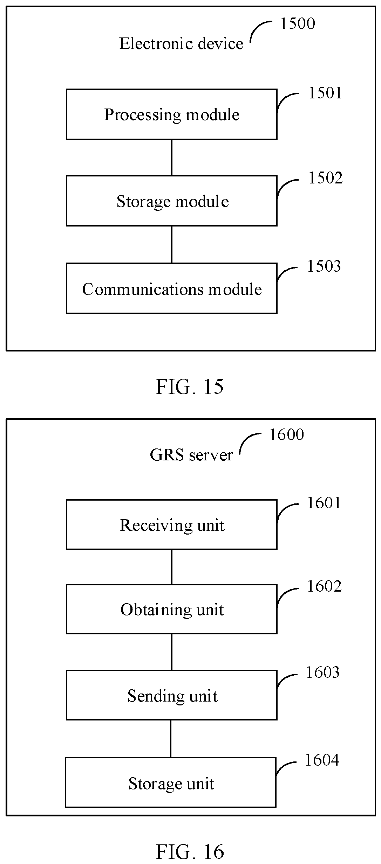

When an integrated unit is used, FIG. 15 is another possible schematic structural diagram of an electronic device 1500 according to an embodiment of this application. The electronic device 1500 may include a processing module 1501, a storage module 1502, and a communications module 1503. The processing module 1501 is configured to: control and manage an action of the electronic device 1500. For example, the processing module 1501 may be configured to support the electronic device 1500 in performing S608, S1007, and the like in the foregoing embodiments. The storage module 1502 is configured to store program code and data that are of the electronic device 1500. The communications module 1503 is configured to support the electronic device 1500 in communicating with another network entity, to implement a function such as data exchange or internet access. For example, the communications module 1503 is configured to support the electronic device 1500 in interacting with a GRS server, to obtain an IP address required for accessing a resource. For another example, the communications module 1503 is configured to support the electronic device 1500 in interacting with a server deployed on the internet, to obtain a corresponding resource to provide a business service for a user. The electronic device 1500 may further include an input module, a display module, and the like. The display module may be configured to display content according to an indication of the processing module 1501. The input module may be configured to support the electronic device 1500 in receiving an input of the user, for example, the first input.

The processing module 1501 may be a processor or a controller. The communications module 1503 may be a transceiver, an RF circuit, a communications interface, or the like. The storage module 1502 may be a memory. The display module may be a screen or a display. The input module may be a touchscreen, a voice input apparatus, or the like.

When the processing module 1501 is the processor, the communications module 1503 is the RF circuit, the storage module 1502 is the memory, and the display module is the display, the electronic device 1500 provided in this embodiment may be the electronic device shown in FIG. 2. The communications module 1503 may include not only the RF circuit, but also a Wi-Fi module, an NFC module, and a Bluetooth module. The communications modules such as the RF circuit, the NFC module, the Wi-Fi module, and the Bluetooth module may be collectively referred to as a communications interface. The processor, the RF circuit, the touchscreen, and the memory may be coupled together through a bus.

When each function module is obtained through division based on each corresponding function, FIG. 16 is a possible schematic structural diagram of a GRS server 1600 according to an embodiment. The GRS server 1600 may include a receiving unit 1601, an obtaining unit 1602, and a sending unit 1603.

The receiving unit 1601 is configured to support the GRS server 1600 in performing the operation of receiving the IP address list and the operation of receiving the first key value in the foregoing method embodiments, and/or is configured to perform another process of the technology described in this specification.

The obtaining unit 1602 is configured to support the GRS server 1600 in performing S604, S1004, S1005, S1205, and S1206 in the foregoing method embodiments, and/or is configured to perform another process of the technology described in this specification.

The sending unit 1603 is configured to support the GRS server 1600 in performing S605, S607, S1006, and S1207 in the foregoing method embodiments, and/or is configured to perform another process of the technology described in this specification.

In this embodiment of this application, as shown in FIG. 16, the GRS server 1600 may further include a storage unit 1604.

The storage unit 1604 is configured to support the GRS server 1600 in performing the storage operation in the foregoing method embodiments, for example, correspondingly storing the IP address list and the domain name in the URL corresponding to the first key value, and/or is configured to perform another process of the technology described in this specification.

All related content of the steps in the foregoing method embodiments may be cited in function descriptions of corresponding function modules. Details are not described herein again.

When an integrated unit is used, an embodiment of this application provides another possible schematic structural diagram of a GRS server. The GRS server may include a processing module, a storage module, and a communications module. The processing module is configured to: control and manage an action of the GRS server. For example, the processing module may be configured to support the GRS server in performing S604, S 1004, S 1005, S1205, S1206, and the like in the foregoing embodiments. The storage module is configured to store program code and data that are of the GRS server. The communications module is configured to support the GRS server in communicating with another network entity, to implement a function such as data exchange. For example, the communications module is configured to support the GRS server in interacting with an electronic device, to provide the electronic device with an IP address required for accessing a resource. For another example, the communications module is configured to support the GRS server in interacting with a DNS server to obtain an IP address.

The processing module may be a processor. The communications module may be a communications interface. The storage module may be a memory. When the processing module is the processor, the communications module is the communications interface, and the storage module is the memory, the GRS server provided in this embodiment may be the computer system shown in FIG. 4.

Some other embodiments of this application further provide a computer readable storage medium. The computer readable storage medium stores an instruction. When an electronic device runs the instruction, the electronic device is enabled to perform related method steps in any one of FIG. 6, FIG. 10, or FIG. 12A and FIG. 12B to implement the method in the foregoing embodiments.

Some other embodiments of this application further provide a computer readable storage medium. The computer readable storage medium stores an instruction. When a GRS server runs the instruction, the GRS server performs related method steps in any one of FIG. 6, FIG. 10, or FIG. 12A and FIG. 12B to implement the method in the foregoing embodiments.

Some other embodiments of this application further provide a computer program product. When the computer program product is run on an electronic device, the electronic device is enabled to perform related method steps in any one of FIG. 6, FIG. 10, or FIG. 12Aand FIG. 12B to implement the method in the foregoing embodiments.

Some other embodiments of this application further provide a computer program product. When the computer program product is run on a GRS server, the GRS server is enabled to perform related method steps in any one of FIG. 6, FIG. 10, or FIG. 12A and FIG. 12B to implement the method in the foregoing embodiments.

Some other embodiments of this application further provide a control device. The control device includes a processor and a memory, the memory is configured to store computer program code, and the computer program code includes an instruction. When the processor executes the instruction, the control device performs related method steps in any one of FIG. 6, FIG. 10, or FIG. 12A and FIG. 12B to implement the method in the foregoing embodiments. The control device may be an integrated circuit IC, or may be a system-on-a-chip SOC. The integrated circuit may be a universal integrated circuit, or may be a field programmable gate array FPGA, or may be an application-specific integrated circuit ASIC.

The electronic device, the GRS server, the computer storage medium, the computer program product, and the control device provided in the embodiments of this application each are configured to perform the corresponding method provided above. Therefore, for beneficial effects that can be achieved by the electronic device, the GRS server, the computer storage medium, the computer program product, and the control device, refer to the beneficial effects in the corresponding method provided above. Details are not described herein again.

In the descriptions in the foregoing implementations, a person skilled in the art may clearly understand that for the purpose of convenient and brief description, division into the foregoing function modules is merely used as an example for description. In actual application, the foregoing functions can be allocated to different function modules for implementation based on a requirement. To be specific, an inner structure of an apparatus is divided into different function modules to implement all or some of the functions described above. For a detailed working process of the foregoing described system, apparatus, and unit, refer to a corresponding process in the foregoing method embodiments. Details are not described herein again.

In the several embodiments provided in the embodiments, it should be understood that the disclosed system, apparatus, and method may be implemented in another manner. For example, the foregoing described apparatus embodiment is merely an example. For example, division into the modules or the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions of the embodiments.

In addition, function units in each of the embodiments may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer readable storage medium. Based on such an understanding, the technical solutions in the embodiments essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods in the embodiments. The foregoing storage medium includes any medium that can store program code, such as a flash memory, a removable hard disk, a read-only memory, a random access memory, a magnetic disk, or an optical disc.

## Claims

1. A domain name resolution method performed by an electronic device, wherein the method comprises the steps of:
• receiving (S 601, S 1001) a first input of a user, wherein the first input is used to trigger an application in the electronic device to interact with a certain server deployed on the internet to provide a business service for the user by accessing a resource on the certain server;
• obtaining (S 602, S 1002) a key value and an identifier from a configuration file of the application in response to the first input,
o wherein the key value is an application name of the application, a service name of the business service, or a service identifier of the business service, and
o the identifier is an Internet Protocol, IP, address of a global router service, GRS, server, wherein the identifier identifies the server storing a correspondence between the key value and a uniform resource locator, URL;
• sending (S 603, S 1003) the key value to the GRS server identified by the identifier;
• receiving (S 607, S 1006) at least two IP addresses from the GRS server, the at least two IP addresses being based on the domain name in the URL;
• determining (S 608, S 1007) a target IP address from the at least two IP addresses, by randomly selecting one of the at least two IP addresses as the target IP address;
• accessing the resource on the certain server identified by the target IP address, to provide the business service for the user,
wherein the method further comprises:
• receiving from the GRS server the uniform resource locator, URL, corresponding to the key value, wherein the URL comprises a domain name of the certain server that stores the resource; and
the accessing the resource on the certain server identified by the target IP address, to provide the business service for the user comprises:
• sending a hypertext transfer protocol, HTTP/hypertext transfer protocol secure, HTTPS, request to the certain server identified by the target IP address, wherein the HTTP/HTTPS request comprises a URL obtained after the domain name in the URL is replaced with the target IP address; and
• receiving an HTTP/HTTPS response from the certain server identified by the target IP address, wherein the HTTP/HTTPS response comprises the resource.

2. A domain name resolution method performed by a global router service, GRS, server, wherein the method comprises the steps of:
• receiving (S 603, S 1003) a key value from an electronic device,
o wherein the key value is an application name of an application stored on the electronic device, a service name of a business service, or a service identifier of the business service,
o wherein the application in the electronic device is used to interact with a certain server deployed on the internet to provide the business service for a user of the electronic device by accessing a resource on the certain server;
• obtaining (S 602, S 1004) a uniform resource locator, URL, corresponding to the key value, wherein the URL comprises a domain name of the certain server that stores the resource;
• obtaining (S 606, S 1005) at least two IP addresses based on the domain name in the URL;
• sending (S 607, S 1006) the at least two IP addresses and the URL, corresponding to the key value to the electronic device.

3. The method according to claim 2, wherein the obtaining the at least two IP addresses based on the domain name in the URL comprises:
• performing domain name resolution on the domain name in the URL to obtain the at least two IP addresses.

4. The method according to claim 2, wherein the obtaining the at least two IP addresses based on the domain name in the URL comprises:
• sending the domain name in the URL to a domain name system, DNS, server; and
• receiving the at least two IP addresses from the DNS server.

5. The method according to claim 2, wherein the method further comprises:
• correspondingly storing, in the GRS server, the at least two IP addresses and the domain name in the URL.

6. An electronic device comprising a memory, a processor, and a computer program that is stored in the memory and that can be run on the processor, wherein when the processor executes the computer program, the electronic device is enabled to implement the method according to claim 1.

7. A global router service, GRS, server comprising a memory, a processor, and a computer program that is stored in the memory and that can be run on the processor, wherein when the processor executes the computer program, the GRS server is enabled to implement the method according to any one of claims 2 to 5.

8. A computer program product comprising an instruction, wherein when the computer program product is run on an electronic device, the electronic device is enabled to perform the method according to claim 1.

9. A computer program product comprising an instruction, wherein when the computer program product is run on a global router service, GRS, server, the GRS server is enabled to perform the method according to any one of claims 2 to 5.

10. A computer readable storage medium, comprising an instruction, wherein when the instruction is run on an electronic device, the electronic device is enabled to perform the method according to claim 1.

11. A computer readable storage medium, comprising an instruction, wherein when the instruction is run on a global router service, GRS, server, the GRS server is enabled to perform the method according to any one of claims 2 to 5.

12. A domain name resolution system, wherein the system comprises an electronic device and a global router service, GRS, server, wherein the electronic device is configured to perform the method according to claim 1 and the GRS server is configured to perform any of the methods according to claims 2 to 5.

## Patentansprüche

1. Verfahren zur Domänennamenauflösung, durchgeführt durch eine elektronische Einrichtung, wobei das Verfahren die Schritte umfasst:
• Empfangen (S 601, S 1001) einer ersten Eingabe eines Benutzers, wobei die erste Eingabe verwendet wird, um eine Anwendung in der elektronischen Einrichtung zum Interagieren mit einem bestimmten Server auszulösen, eingesetzt im Internet, um einen Geschäftsdienst für den Benutzer mittels Zugriffs auf eine Ressource auf dem bestimmten Server bereitzustellen;
• Erhalten (S 602, S 1002) eines Schlüsselwerts und einer Kennung aus einer Konfigurationsdatei der Anwendung in Reaktion auf die erste Eingabe,
o wobei der Schlüsselwert ein Anwendungsname der Anwendung, ein Dienstname des Geschäftsdienstes oder eine Dienstkennung des Geschäftsdienstes ist, und
o die Kennung eine Internetprotokoll- bzw. IP-Adresse eines "Global Router Service"- bzw. GRS-Servers ist, wobei die Kennung den Server identifiziert, der eine Entsprechung zwischen dem Schlüsselwert und einem einheitlichen Ressourcenzeiger ("Uniform Resource Locator", URL) speichert;
• Senden (S 603, S 1003) des Schlüsselwerts zu dem durch die Kennung identifizierten GRS-Server;
• Empfangen (S 607, S 1006) von mindestens zwei IP-Adressen von dem GRS-Server, wobei die mindestens zwei IP-Adressen auf dem Domänennamen in dem URL basieren;
• Ermitteln (S 608, S 1007) einer Ziel-IP-Adresse aus den mindestens zwei IP-Adressen durch zufällige Auswahl einer der mindestens zwei IP-Adressen als die Ziel-IP-Adresse;
• Zugriff auf die durch die Ziel-IP-Adresse identifizierte Ressource auf dem bestimmten Server, um den Geschäftsdienst für den Benutzer bereitzustellen,
wobei das Verfahren ferner umfasst:
• Empfangen des einheitlichen Ressourcenzeigers ("Uniform Resource Locator", URL) entsprechend dem Schlüsselwert von dem GRS-Server, wobei der URL einen Domänennamen des bestimmten Servers, der die Ressource speichert, umfasst; und der Zugriff auf die Ressource auf dem durch die Ziel-IP-Adresse identifizierten bestimmten Server zum Bereitstellen des Geschäftsdienstes für den Benutzer umfasst:
• Senden einer Hypertext-Übertragungsprotokoll("Hypertext Transfer Protocol", HTTP)/sicheres Hypertext-Übertragungsprotokoll("Hypertext Transfer Protocol Secure", HTTPS)-Anfrage zu dem durch die Ziel-IP-Adresse identifizierten bestimmten Server, wobei die HTTP/HTTPS-Anfrage einen URL umfasst, erhalten, nachdem der Domänenname in dem URL durch die Ziel-IP-Adresse ersetzt worden ist; und
• Empfangen einer HTTP/HTTPS-Antwort von dem durch die Ziel-IP-Adresse identifizierten bestimmten Server, wobei die HTTP/HTTPS-Antwort die Ressource umfasst.

2. Verfahren zur Domänennamenauflösung, durchgeführt durch einen "Global Router Service" bzw. GRS-Server, wobei das Verfahren die Schritte umfasst:
• Empfangen (S 603, S 1003) eines Schlüsselwerts von einer elektronischen Einrichtung,
o wobei der Schlüsselwert ein Anwendungsname einer in der elektronischen Einrichtung gespeicherten Anwendung, ein Dienstname eines Geschäftsdienstes oder eine Dienstkennung des Geschäftsdienstes ist,
o wobei die Anwendung in der elektronischen Einrichtung verwendet wird zum Interagieren mit einem bestimmten Server, eingesetzt im Internet, um den Geschäftsdienst für einen Benutzer der elektronischen Einrichtung mittels Zugriffs auf eine Ressource auf dem bestimmten Server bereitzustellen;
• Erhalten (S 602, S 1004) eines einheitlichen Ressourcenzeigers ("Uniform Resource Locator", URL) entsprechend dem Schlüsselwert, wobei der URL einen Domänennamen des bestimmten Servers, der die Ressource speichert, umfasst;
• Erhalten (S 606, S 1005) von mindestens zwei IP-Adressen basierend auf dem Domänennamen in dem URL;
• Senden (S 607, S 1006) der mindestens zwei IP-Adressen und des URL entsprechend dem Schlüsselwert zu der elektronischen Einrichtung.

3. Verfahren nach Anspruch 2, wobei das Erhalten der mindestens zwei IP-Adressen basierend auf dem Domänennamen in dem URL umfasst:
• Durchführen von Domänennamenauflösung an dem Domänennamen in dem URL, um die mindestens zwei IP-Adressen zu erhalten.

4. Verfahren nach Anspruch 2, wobei das Erhalten der mindestens zwei IP-Adressen basierend auf dem Domänennamen in dem URL umfasst:
• Senden des Domänennamens in dem URL zu einem Domänennamensystem- bzw. DNS-Server; und
• Empfangen der mindestens zwei IP-Adressen von dem DNS-Server.

5. Verfahren nach Anspruch 2, wobei das Verfahren ferner umfasst:
• entsprechendes Speichern der mindestens zwei IP-Adressen und des Domänennamens in dem URL in dem GRS-Server.

6. Elektronische Einrichtung, umfassend einen Speicher, einen Prozessor und ein Computerprogramm, das in dem Speicher gespeichert ist und das auf dem Prozessor ausgeführt werden kann, wobei, wenn der Prozessor das Computerprogramm ausführt, die elektronische Einrichtung zum Implementieren des Verfahrens nach Anspruch 1 aktiviert ist.

7. "Global Router Service"- bzw. GRS-Server, umfassend einen Speicher, einen Prozessor und ein Computerprogramm, das in dem Speicher gespeichert ist und das auf dem Prozessor ausgeführt werden kann, wobei, wenn der Prozessor das Computerprogramm ausführt, der GRS-Server zum Implementieren des Verfahrens nach einem der Ansprüche 2 bis 5 aktiviert ist.

8. Computerprogrammprodukt, umfassend eine Anweisung, wobei, wenn das Computerprogrammprodukt auf einer elektronischen Einrichtung ausgeführt wird, die elektronische Einrichtung zum Durchführen des Verfahrens nach Anspruch 1 aktiviert ist.

9. Computerprogrammprodukt, umfassend eine Anweisung, wobei, wenn das Computerprogrammprodukt auf einem "Global Router Service"- bzw. GRS-Server ausgeführt wird, der GRS-Server zum Durchführen des Verfahrens nach einem der Ansprüche 2 bis 5 aktiviert ist.

10. Computerlesbares Speichermedium, umfassend eine Anweisung, wobei, wenn die Anweisung auf einer elektronischen Einrichtung ausgeführt wird, die elektronische Einrichtung zum Durchführen des Verfahrens nach Anspruch 1 aktiviert ist.

11. Computerlesbares Speichermedium, umfassend eine Anweisung, wobei, wenn die Anweisung auf einem "Global Router Service"- bzw. GRS-Server ausgeführt wird, der GRS-Server zum Durchführen des Verfahrens nach einem der Ansprüche 2 bis 5 aktiviert ist.

12. System zur Domänennamenauflösung, wobei das System eine elektronische Einrichtung und einen "Global Router Service"- bzw. GRS-Server umfasst, wobei die elektronische Einrichtung ausgelegt ist zum Durchführen des Verfahrens nach Anspruch 1 und der GRS-Server ausgelegt ist zum Durchführen eines der Verfahren nach einem der Ansprüche 2 bis 5.

## Revendications

1. Procédé de résolution de nom de domaine réalisé par un dispositif électronique, le procédé comprenant les étapes suivantes :
• la réception (S 601, S 1001) d'une première entrée d'un utilisateur, la première entrée étant utilisée pour amener une application dans le dispositif électronique à entrer en interaction avec un serveur particulier déployé sur le réseau Internet pour fournir un service commercial pour l'utilisateur par accès à une ressource sur le serveur particulier ;
• l'obtention (S 602, S 1002) d'une valeur de clé et d'un identifiant à partir d'un fichier de configuration de l'application en réponse à la première entrée,
o la valeur de clé étant un nom d'application de l'application, un nom de service du service commercial, ou un identifiant de service du service commercial, et
o l'identifiant étant une adresse de protocole Internet, IP, d'un serveur du service de routage mondial, GRS, l'identifiant identifiant le serveur stockant une correspondance entre la valeur de clé et un localisateur uniforme de ressource, URL ;
• l'envoi (S 603, S 1003) de la valeur de clé au serveur GRS identifié par l'identifiant ;
• la réception (S 607, S 1006) d'au moins deux adresses IP depuis le serveur GRS, les au moins deux adresses IP étant basées sur le nom de domaine dans l'URL ;
• la détermination (S 608, S 1007) d'une adresse IP cible à partir des au moins adresses IP par sélection aléatoire d'une des au moins deux adresses IP comme adresse IP cible ;
• l'accès à la ressource sur le serveur particulier identifié par l'adresse IP cible dans le but de fournir le service commercial pour l'utilisateur,
le procédé comprenant en outre :
• la réception, depuis le serveur GRS, du localisateur uniforme de ressource, URL, correspondant à la valeur de clé, l'URL comprenant un nom de domaine du serveur particulier qui stocke la ressource ; et
l'accès à la ressource sur le serveur particulier identifié par l'adresse IP cible dans le but de fournir le service commercial pour l'utilisateur comprenant :
• l'envoi d'une requête sous protocole de transfert hypertexte, HTTP/protocole de transfert hypertexte sécurisé, HTTPS, au serveur particulier identifié par l'adresse IP cible, la requête HTTP/HTTPS comprenant un URL obtenu après remplacement du nom de domaine dans l'URL par l'adresse IP cible ; et
• la réception d'une réponse HTTP/HTTPS depuis le serveur particulier identifié par l'adresse IP cible, la réponse HTTP/HTTPS comprenant la ressource.

2. Procédé de résolution de nom de domaine réalisé par un serveur du service de routage mondial, GRS, le procédé comprenant les étapes suivantes :
• la réception (S 603, S 1003) d'une valeur de clé depuis un dispositif électronique,
o la valeur de clé étant un nom d'application d'une application stockée sur le dispositif électronique, un nom de service d'un service commercial, ou un identifiant de service du service commercial,
o l'application dans le dispositif électronique étant utilisée pour entrer en interaction avec un serveur particulier déployé sur le réseau Internet dans le but de fournir le service commercial pour un utilisateur du dispositif électronique par accès à une ressource sur le serveur particulier ;
• l'obtention (S 602, S 1004) d'un localisateur uniforme de ressource, URL, correspondant à la valeur de clé, l'URL comprenant un nom de domaine du serveur particulier qui stocke la ressource ;
• l'obtention (S 606, S 1005) d'au moins deux adresses IP basées sur le nom de domaine dans l'URL ;
• l'envoi (S 607, S 1006) des au moins deux adresses IP et de l'URL, correspondant à la valeur de clé, au dispositif électronique.

3. Procédé selon la revendication 2, dans lequel l'obtention des au moins deux adresses IP basées sur le nom de domaine dans l'URL comprend :
• la réalisation d'une résolution de nom de domaine sur le nom de domaine dans l'URL dans le but d'obtenir les au moins deux adresses IP.

4. Procédé selon la revendication 2, dans lequel l'obtention des au moins deux adresses IP basées sur le nom de domaine dans l'URL comprend :
• l'envoi du nom de domaine dans l'URL à un serveur du système de noms de domaine, DNS ; et
• la réception des au moins deux adresses IP depuis le serveur DNS.

5. Procédé selon la revendication 2, le procédé comprenant en outre :
• le stockage correspondant, dans le serveur GRS, des au moins deux adresses IP et du nom de domaine dans l'URL.

6. Dispositif électronique comprenant une mémoire, un processeur et un programme d'ordinateur qui est stocké dans la mémoire et qui est exécutable sur le processeur, l'exécution du programme d'ordinateur par le processeur permettant au dispositif électronique de mettre en oeuvre le procédé selon la revendication 1.

7. Serveur du service de routage mondial, GRS, comprenant une mémoire, un processeur et un programme d'ordinateur qui est stocké dans la mémoire et qui est exécutable sur le processeur, l'exécution du programme d'ordinateur par le processeur permettant au serveur GRS de mettre en oeuvre le procédé selon l'une quelconque des revendications 2 à 5.

8. Produit programme d'ordinateur comprenant une instruction, l'exécution du produit programme d'ordinateur sur un dispositif électronique permettant au dispositif électronique de réaliser le procédé selon la revendication 1.

9. Produit programme d'ordinateur comprenant une instruction, l'exécution du produit programme d'ordinateur sur un serveur du service de routage mondial, GRS, permettant au serveur GRS de réaliser le procédé selon l'une quelconque des revendications 2 à 5.

10. Support de stockage lisible par ordinateur, comprenant une instruction, l'exécution de l'instruction sur un dispositif électronique permettant au dispositif électronique de réaliser le procédé selon la revendication 1.

11. Support de stockage lisible par ordinateur, comprenant une instruction, l'exécution de l'instruction sur un serveur du service de routage mondial, GRS, permettant au serveur GRS de réaliser le procédé selon l'une quelconque des revendications 2 à 5.

12. Système de résolution de nom de domaine, le système comprenant un dispositif électronique et un serveur du service de routage mondial, GRS, le dispositif électronique étant configuré pour réaliser le procédé selon la revendication 1 et le serveur GRS étant configuré pour réaliser l'un quelconque des procédés selon les revendications 2 à 5.
